# EUROPEAN PATENT APPLICATION

(11) **EP 2 477 272 A2**
(43) Date of publication of application: **18.07.2012**
(21) Application number: 10815057.4
(22) Date of filing: 10.09.2010
(51) Int. Cl.: H01Q 1/24, H04M 1/02

(54) **PORTABLE TERMINAL**

(30) Priority: 10.09.2009 JP 2009209741
(71) Applicant: Panasonic Corporation, Kadoma-shi Osaka 571-8501 (JP)
(72) Inventor: MIYAMATSU, Yuki, Osaka 540-6207 (JP); SUZUKI, Ken, Osaka 540-6207 (JP)
(74) Representative: Grünecker, Kinkeldey, Stockmair & Schwanhäusser
(86) International application number: PCT/IB2010/002745
(87) International publication number: WO 2011/030227

(57) **Abstract**

The present invention enables the formation of a contact between an electrically conductive spring member and an electrically conductive plate member. The portable terminal includes a whip antenna, a housing that has an insertion hole through which the whip antenna is inserted, a printed circuit board that is disposed within the housing, the electrically conductive plate member that is abutted against the whip antenna within the housing, and the electrically conductive spring member that is arranged between the printed circuit board and the electrically conductive plate member. The whip antenna includes a slide part that is slidable within the housing, and a retention part that slidably retains the slide part. The electrically conductive plate member is positioned between the whip antenna and the electrically conductive spring member within the housing, and is pressed against the whip antenna at a second surface of the electrically conductive plate member opposite to a first surface of the electrically conductive plate member against which the electrically conductive spring member is press in a thickness direction of the housing.

## Description

### Technical Field

The present invention relates to a mobile terminal having a first housing and a second housing openably and closably coupled with each other through a coupling part.

### Background Art

Up to now, there have been known folding mobile terminals in which a first housing mainly having an operating part and a second housing mainly having a display part such as a liquid crystal screen can be opened or closed through a hinge mechanism. The general hinge mechanism includes a first housing, a second housing, a coupling housing that rotatably couple the first housing and the second housing together, a first hinge part that fixes the first housing and the second housing to each other to be rotatable about a first axis having a lateral direction of the first housing as an axial center, and a second hinge part that fixes the coupling housing and the second housing to each other to be rotatable about a second axis having a longitudinal direction of the second housing as an axial core. The second hinge part includes a plate-like first coupling body that is fixed to an interior of the coupling housing along a longitudinal direction of the coupling housing, a plate-like second coupling body that is fixed to an interior of the second housing along a lateral direction of the second housing, and a pivot part that is pivotally mounted on the first coupling body and the second coupling body to be rotatable about the second axis. The coupling housing couples the first hinge part and the second hinge part together, and covers the first coupling body (for example, refer to Patent Literature 1).

In recent years, mails are transmitted or received, games are played, or TV broadcast is received by the aid of the display part and the operating part in the mobile terminal of this type. With diversification of a use situation of the portable electronic device, for example, when call is conducted, the mails are transmitted or received, or the games are played, it would be convenient to provide a so-called longitudinally opened state in which the lower housing (first housing) and the upper housing (second housing) are opened through the coupling part (hinge mechanism) in a longitudinal direction thereof to longitudinally arrange the display part and the operating part so that a user can operate the device with one hand while watching the rectangular display part in a longitudinally long use position. On the other hand, in the case of the games, browser, or TV reception, it would be convenient to provide a laterally opened state in which the first housing and the second housing are opened in a widthwise direction (lateral direction) so that the user uses the display part in a laterally long use position.

For that reason, the mobile terminal disclosed in Patent Literature 1 enables the longitudinally opened state and the laterally opened state where the first housing and the second housing are opened in the longitudinal direction and in the lateral direction, through the coupling part (hinge mechanism), respectively.

Also, the hinge that openably/closably and rotatably couples any one of two housings with the other includes an opening/closing shaft that is rotatably supported by an opening/closing shaft support, a rotating shaft that rotatably penetrates the opening /closing shaft in an orthogonal state, an angle regulation piece that is disposed to be mutually abutted against the opening/closing shaft support and the opening/closing shaft, a rotation regulation part that is fitted to a regulation flange projected from the rotation shaft and the open/close shaft support, and faces the regulation flange, and a fitting plate that is caulked and fixed to a tip of the open/close shaft to retain the open/close shaft. (For example, refer to Patent Literature 2).

### Citation List

### Patent Literature

Patent Literature 1: JP-B-4206118
Patent Literature 2: JP-A-2000-240636

### Summary of Invention

### Technical Problem

Incidentally, in recent years, the coupling part has been also required to be downsized with the downsized openable mobile terminal. In response to this demand, it is conceivable that a through-hole is reduced in diameter, or the pivot part or the coupling body is downsized.

However, in the coupling part of the conventional structure, when an external force to incline the coupling body is added to weaken a support force of the other coupling body relative to one coupling body, there arises such a problem that backlash is liable to occur. For that reason, a distance between one coupling body and the other coupling body is increased with the result that the generated backlash can be reduced as much as possible. On the other hand, there arises such a problem that the coupling part cannot be downsized. Also, the rotating shaft is pivotally mounted on the open/close shaft, and in order to reduce an inclination of the rotating shaft, a diameter of the open/close shaft may be increased. However, this makes the hinge mechanism larger in size.

Also, in the hinge used for the coupling part of the conventional structure, the open/close shaft and the rotating shaft are integrated with each other. When a given shaft diameter is given in order to ensure the strength of the respective shafts, since an arrangement space for arranging the rotation regulation part must be also ensured along the open/close shaft, the hinge mechanism and a space for arranging the hinge mechanism must be sufficiently largely ensured. Therefore, if a rotation regulating method of the rotating shaft is disclosed even if the open/close shaft and the rotating shaft are integrated with each other, the rotation regulation can be appropriately selected. For that reason, a proposal for a downsized rotating device having the rotation regulation is desired. Furthermore, in the hinge used for the coupling part of the conventional structure, although the open/close shaft and the rotating shaft are integrated together, there is no structure that prevents the combined housings from being opened.

Also, in the hinge used for the coupling part of the conventional structure, because the fitting plate for retaining the open/close shaft is caulked and fitted, a time necessary for releasing the coupling made by caulking becomes long. As a time required for disassembly becomes long, disassembly costs are increased. For that reason, a structure is preferable in which not only a generated torque is stabilized and an assembling property is improved, but also a disassembling property is improved.

An object of the present invention is to provide a mobile terminal that can prevent the combined housings from being opened while regulating the rotation of a housing about another rotating axis in a direction perpendicular to one rotating axis relative to the rotation about the one rotating axis.

### Solution to Problem

According to the present invention, there is provided a mobile terminal including a first housing, a second housing, and a coupling part that rotatably couples the second housing with the first housing in a first direction, and rotatably couples the second housing with the first housing in a second direction orthogonal to the first direction, from a superposed state in which the first housing and the second housing are superposed on each other, in which the coupling part includes a first rotating shaft member that rotates in the first direction, a second rotating shaft member that rotates in the second direction, and a movement controller (bearing member) that is arranged adjacent to the second rotating shaft member and is fixed to an interior of the first housing, and the movement controller includes a cylindrical part, and has a step formed on an outer periphery of the cylindrical part, and a side surface of the step is fixed to a protrusion protruded toward the interior of the first housing from the first housing in a state that the side surface of the step faces the protrusion in the first direction.

According to the above configuration, the housings can be prevented from being opened while regulating the rotation of the housing about the rotating axis in the direction perpendicular to the one rotating axis relative to the rotation about the one rotating axis.

In the above mobile terminal, the first housing is configured by engaging a first partial housing member with a second partial housing member. The first partial housing member is arranged on a surface facing the second housing, and the second partial housing member is arranged on a rear surface of the first partial housing member, and the protrusion is arranged on the second partial housing member.

According to the above configuration, the housings can be prevented from being opened in the first direction while regulating the rotation of the housing about another rotating axis in the direction perpendicular to one rotating axis relative to the rotation about the one rotating axis.

In the mobile terminal, the coupling part includes a retention member that rotatably retains the rotating shaft member, a moving member that is disposed within the coupling part, and is movable move from a first position to a second position, and a spring member that urges the moving member from the first position to the second position, in which the moving member abuts against the rotating shaft member to regulate the rotation of the rotating shaft member at one of the first position and the second position, and releases the abutment against the rotating shaft member to permit the rotation of the rotating shaft member at the other of the first position and the second position, and the movement controller is configured by a part of the first housing or fitted to the first housing, and abuts against the moving member to change a position of the moving member against an urging force of the spring member when rotating the second housing in the first direction or an opposite direction to the first direction relative to the first housing.

According to the above configuration, since the movement controller controls the position of the moving member in conjunction with the housing situation, the user merely changes the second housing in the first direction to move the moving member against the urging force so that the moving member can be abutted against the rotating shaft member to regulate the rotation of the second housing. Also, the user merely changes the housing situation to an interposed state so that the moving member can be abutted against the rotating shaft member to release the rotation regulation of the second housing. Advantageous Effects of Invention

According to the mobile terminal of the present invention, the combined housings can be prevented from being opened while regulating the rotation of the housing about another rotating axis in the direction perpendicular to one rotating axis relative to the rotation about the one rotating axis.

### Brief Description of Drawings

[FIG. 1] FIG. 1 is a perspective view illustrating an appearance of an openable cellular phone according to an embodiment of the present invention, in which FIG. 1(a) illustrates a closed state, FIG. 1(b) is a first opened state, FIG. 1(c) is a second opened state, and FIG. 1(d) is a third opened state.
[FIG. 2] FIG. 2 is a cross-sectional view illustrating a center of a second hinge in FIG. 1(a).
[FIG. 3] FIG. 3 is a block diagram illustrating an electric configuration within a housing of the openable cellular phone according to the embodiment of the present invention.
[FIG. 4] FIG. 4 is an exploded perspective view of the second hinge according to the embodiment of the present invention.
[FIG. 5] FIG. 5 is a partial enlarged view of FIG. 2, in which FIG. 5(a) illustrates a case of using a flat member according to this embodiment, and FIG. 5(b) is a case in which the flat member is removed from FIG. 2.
[FIG. 6] FIG. 6 is a perspective view (1) of a bearing member 50.
[FIG. 7] FIG. 7 is a perspective view (2) of the bearing member 50.
[FIG. 8] FIG. 8 is a diagram illustrating an interior of a lower housing 3 when the bearing member 50 is assembled into the lower housing 3.
[FIG. 9] FIG. 9 is a diagram illustrating the interior of the lower housing 3 in the state where the bearing member 50 is assembled into the lower housing 3.
[FIG. 10] FIG. 10(a) is a diagram illustrating a cross section of the lower housing 3 including a large-diameter part 112 of the bearing member 50 illustrated in FIG. 8, taken along a thickness direction (Z-axial direction in the figure) of the housing, and FIG. 10(b) is a diagram illustrating a cross section of the lower housing 3 including the large-diameter part 112 of the bearing member 50 illustrated in FIG. 9, taken along the thickness direction (Z-axial direction in the figure) of the housing.
[FIG. 11] FIG. 11 is a diagram illustrating a cross section (cross section taken along an X-Z direction) passing through a claw part 3G and cables 32 illustrated in FIG. 8.
[FIG. 12] FIG. 12 is a diagram illustrating a cross section of a coupling part 4 including a first catching part 76 of the bearing member 50 illustrated in FIG. 8, taken along the thickness direction (Z-axial direction in the figure) of the housing.
[FIG. 13] FIG. 13 is a diagram illustrating a cross section of the coupling part 4 including the first catching part 76 of the bearing member 50 illustrated in FIG. 9, taken along the thickness direction (Z-axial direction in the figure) of the housing.
[FIG. 14] FIG. 14 is a cross-sectional view illustrating a center of a first hinge when the openable cellular phone is in the closed state according to the embodiment of the present invention.
[FIG. 15] FIG. 15 is a cross-sectional view illustrating the center of the first hinge when the openable cellular phone is in the second opened state according to the embodiment of the present invention.
[FIG. 16] FIG. 16 is a partially enlarged view of FIG. 15.
[FIG. 17] FIG. 17 is a cross-sectional view illustrating the center of the first hinge when the openable cellular phone is in the first opened state according to the embodiment of the present invention.
[FIG. 18] FIG. 18 is a partial cross-sectional view (1) illustrating a neighborhood of the coupling part 4 of the openable cellular phone according to this embodiment.
[FIG. 19] FIG. 19 is a partial cross-sectional view (2) illustrating the neighborhood of the coupling part 4 of the openable cellular phone according to this embodiment.
[FIG. 20] FIG. 20 is a partial cross-sectional view (3) illustrating the neighborhood of the coupling part 4 of the openable cellular phone according to this embodiment.
[FIG. 21] FIG. 21 is a cross-sectional view of the cables of the openable cellular phone according to the embodiment of the present invention, in which FIG. 21 (a) illustrates a state where the cables are in the second hinge, and FIG. 21(b) is a state immediately after the cables are escaped from the second hinge.
[FIG. 22] FIG. 22 is a cross-sectional view of a neighborhood of the second hinge immediately before the openable cellular phone becomes in the first opened state according to the embodiment of the present invention.
[FIG. 23] FIG. 23 is a cross-sectional view of the neighborhood of the second hinge when the openable cellular phone is in the closed state according to the embodiment of the present invention.

### Description of Embodiments

Hereinafter, an embodiment of the present invention will be described in detail with reference to the accompanying drawings. In this example, a folding (openable) cellular phone applied as the openable cellular phone of the present invention will be described.

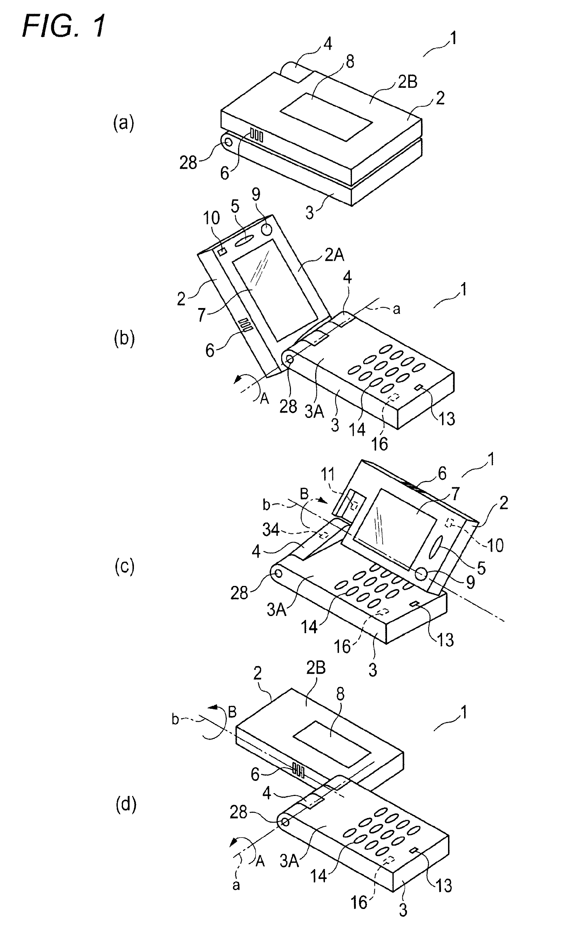

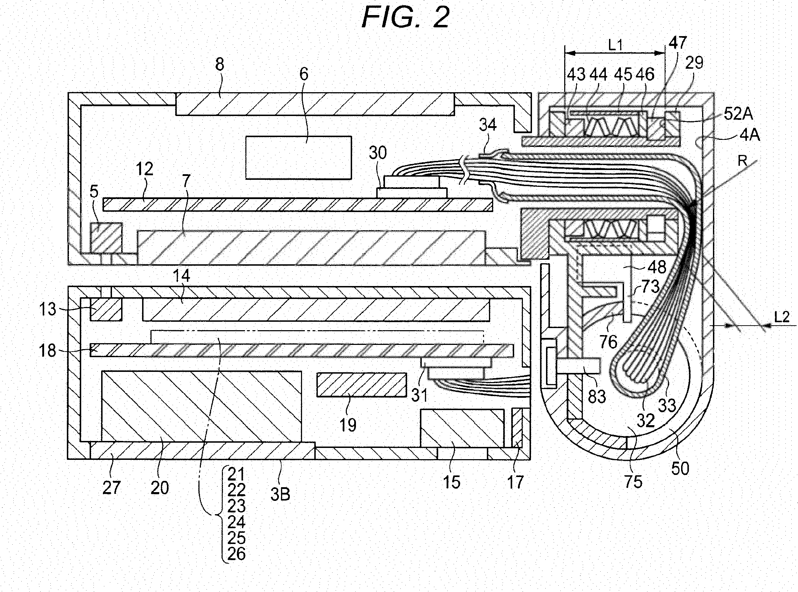

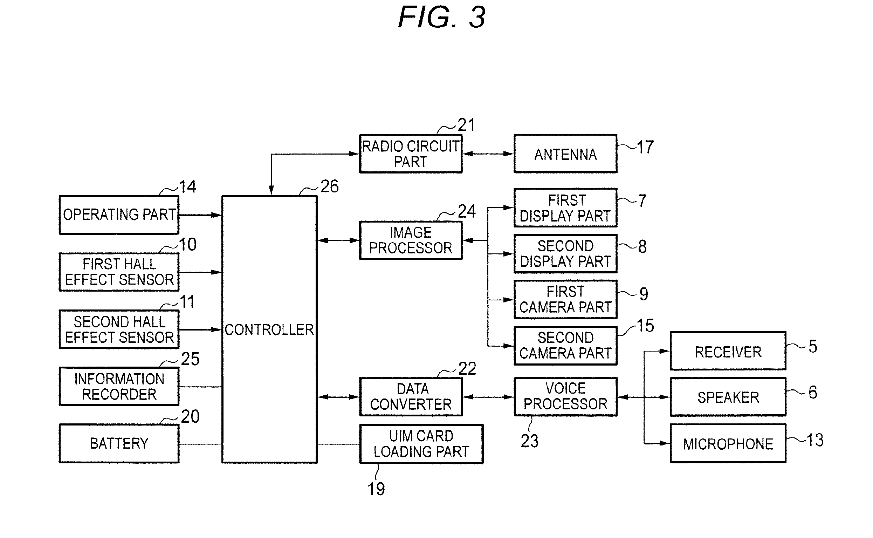

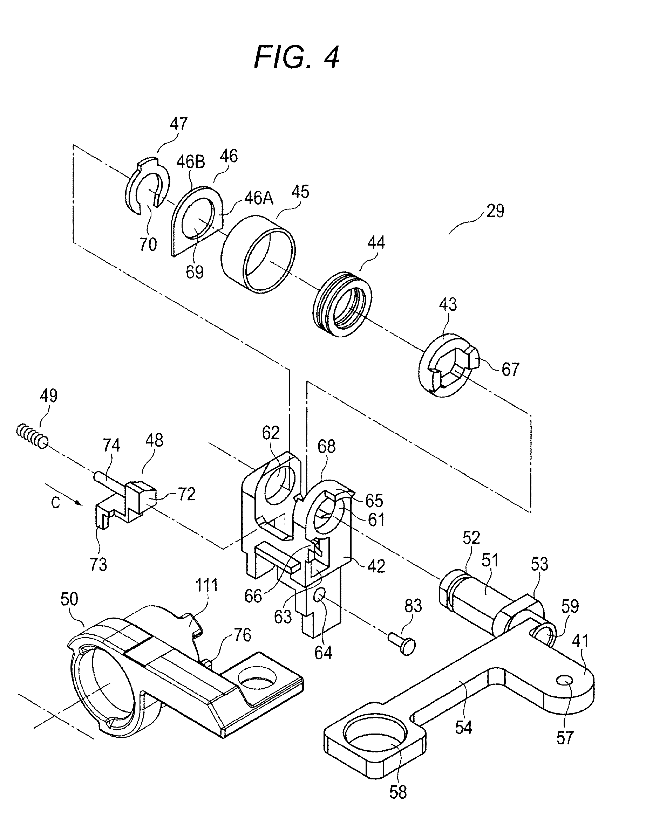

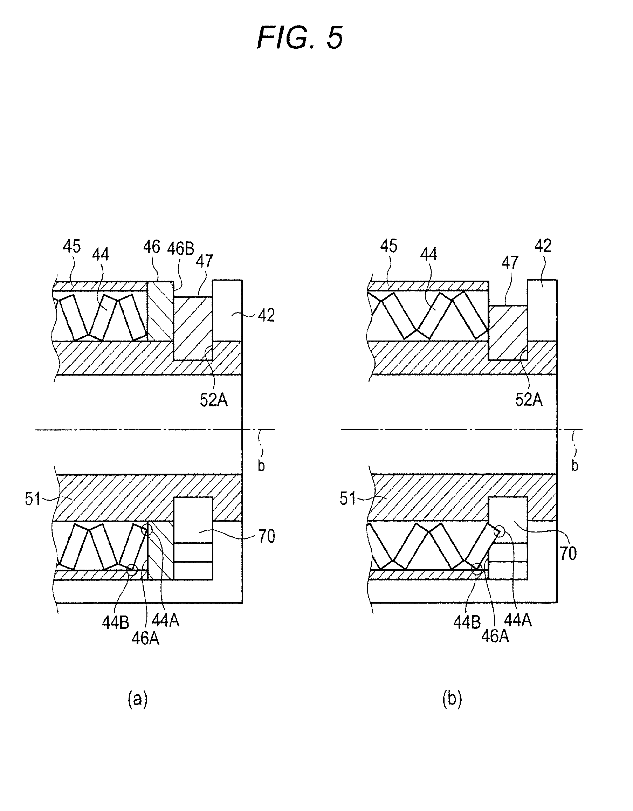

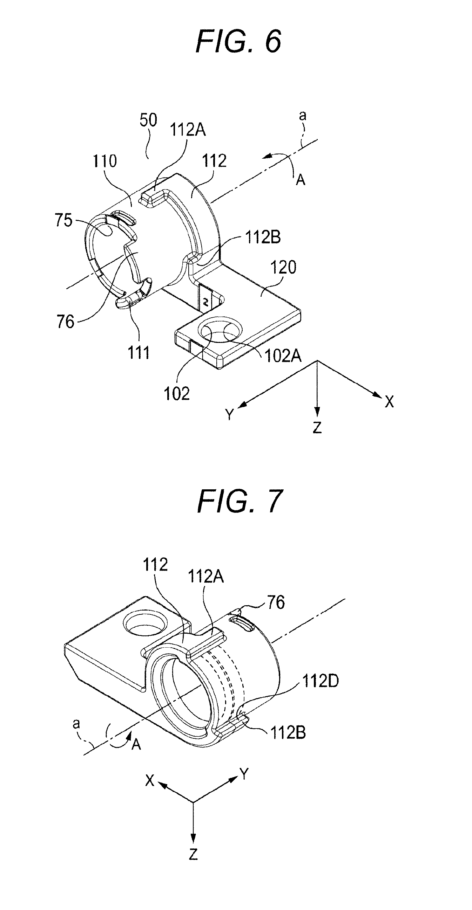

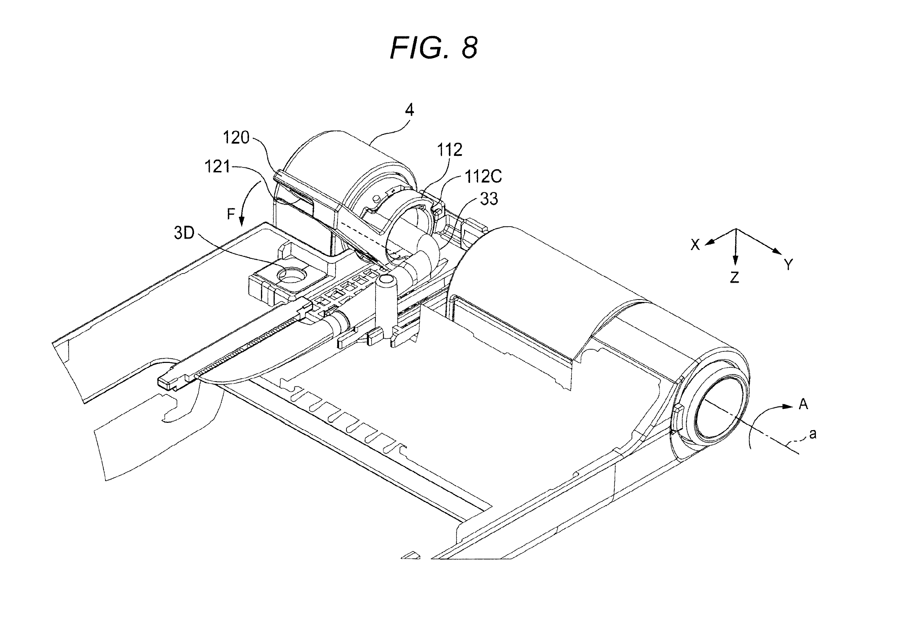

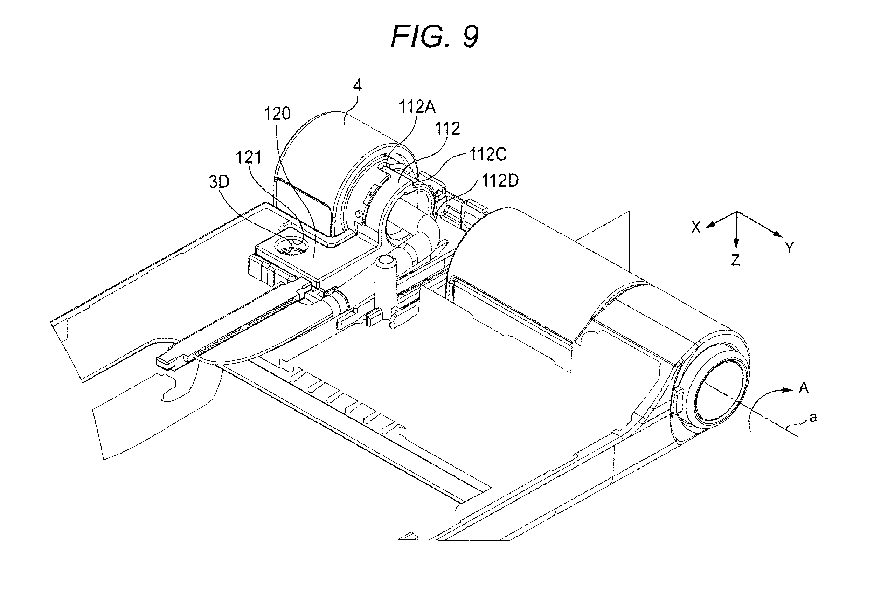

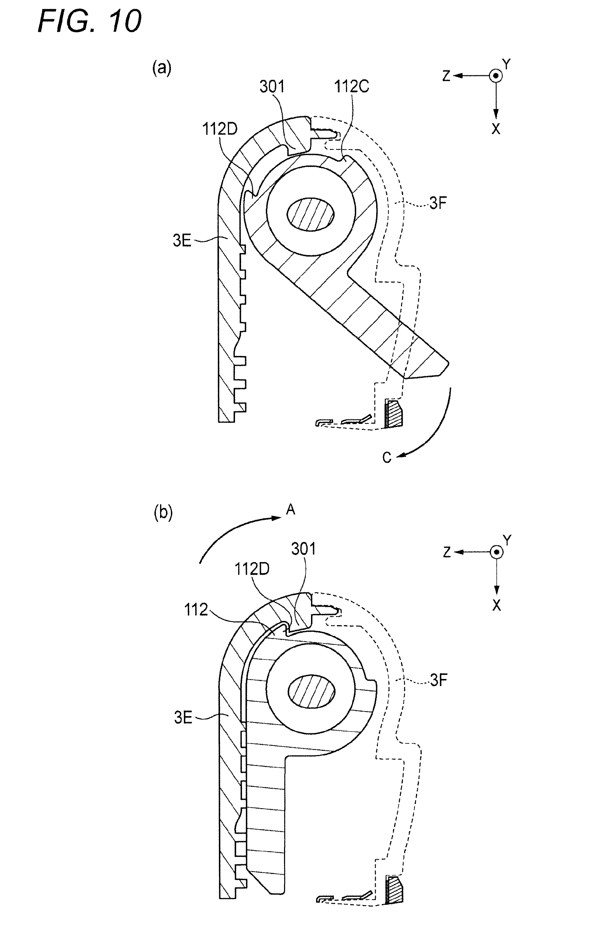

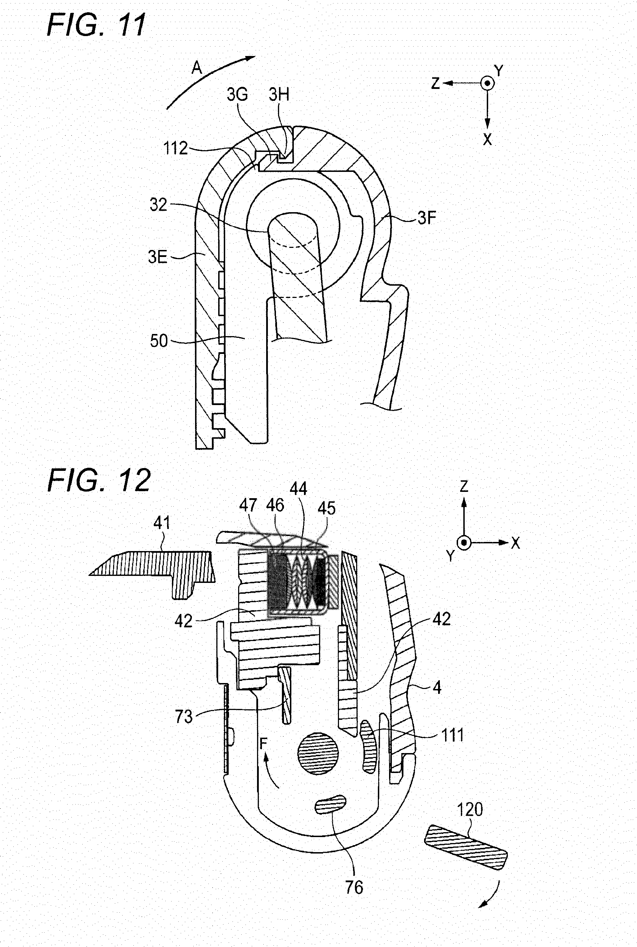

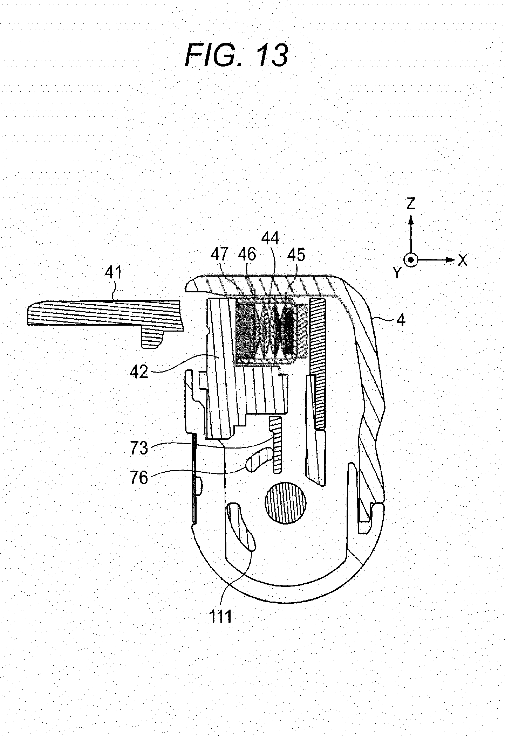

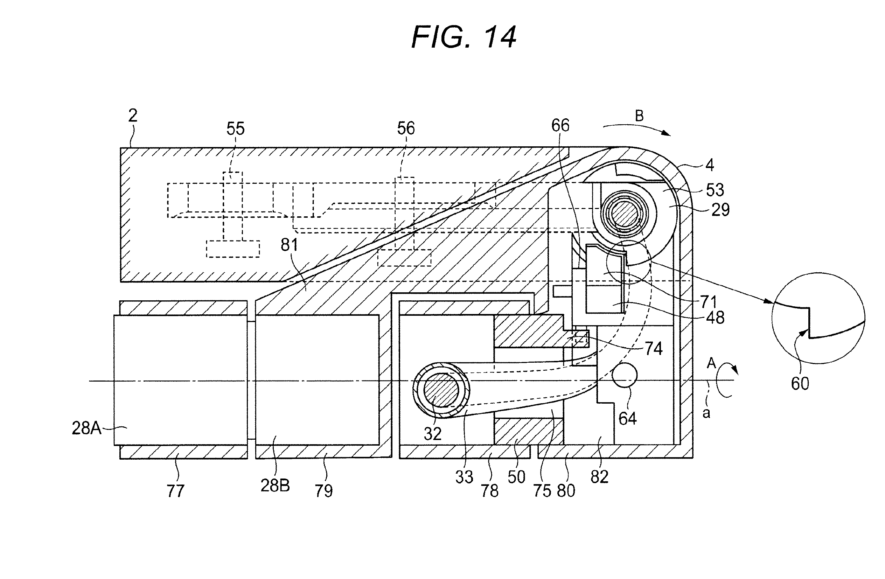

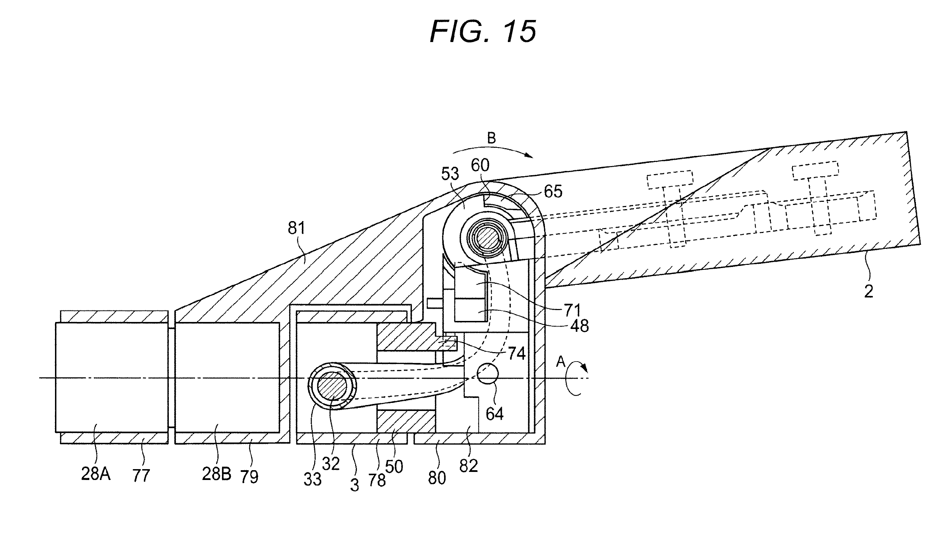

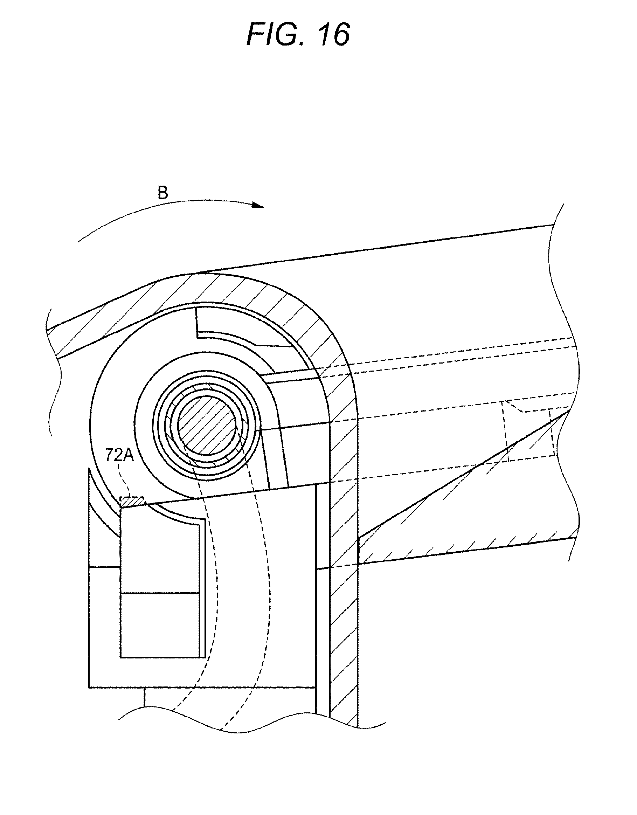

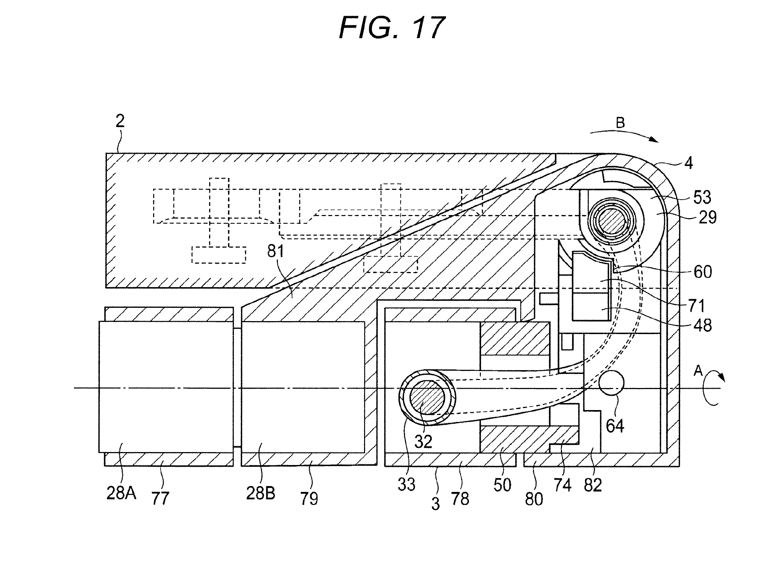

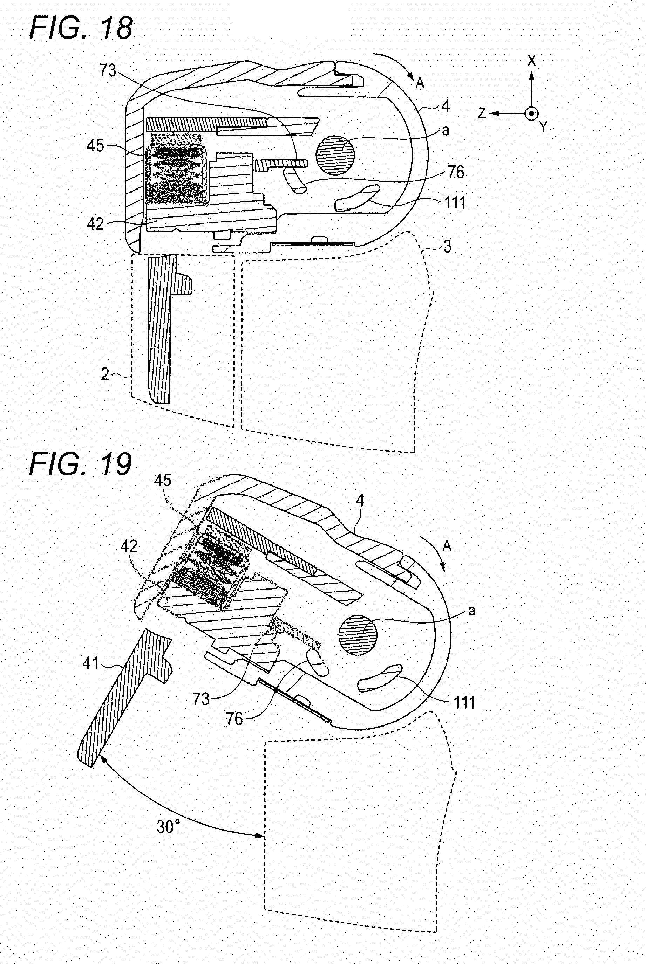

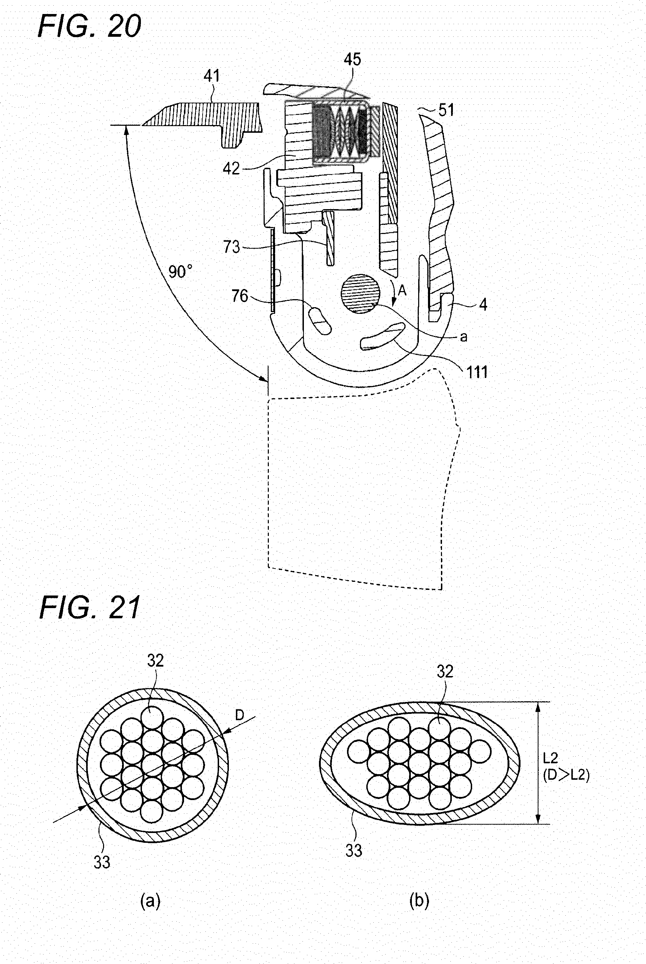

FIG. 1 is a perspective view illustrating an appearance of the openable cellular phone according to the embodiment of the present invention, in which FIG. 1(a) illustrates a closed state, FIG. 1(b) is a first opened state, and FIG. 1(c) is a second opened state. FIG. 2 is a cross-sectional view illustrating a center of a second hinge in FIG. 1(a). FIG. 3 is a block diagram illustrating an electric configuration within a housing of the openable cellular phone according to the embodiment of the present invention. FIG. 4 is an exploded perspective view of the second hinge according to the embodiment of the present invention. FIG. 5 is a partial enlarged view of FIG. 2, in which FIG. 5(a) illustrates a case of using a flat member according to this embodiment, and FIG. 5(b) illustrates a case in which the flat member is removed from FIG. 2. FIG. 6 is a perspective view (1) of a bearing member 50, and FIG. 7 is a perspective view (2) of the bearing member 50. FIG. 8 is a diagram illustrating an interior of a lower housing 3 when the bearing member 50 is assembled into the lower housing 3. FIG. 9 is a diagram illustrating the interior of the lower housing 3 in the state where the bearing member 50 is assembled into the lower housing 3. FIG. 10(a) is a diagram illustrating a cross section of the lower housing 3 including a large-diameter part 112 of the bearing member 50 illustrated in FIG. 8, taken along a thickness direction (Z-axial direction in the figure) of the housing, and FIG. 10(b) is a diagram illustrating a cross section of the lower housing 3 including the large-diameter part 112 of the bearing member 50 illustrated in FIG. 9, taken along the thickness direction (Z-axial direction) of the housing. FIG. 12 is a diagram illustrating a cross section of a coupling part 4 including a first catching part 76 of the bearing member 50 illustrated in FIG. 8, taken along the thickness direction (Z-axial direction) of the housing. FIG. 13 is a diagram illustrating a cross section of the coupling part 4 including the first catching part 76 of the bearing member 50 illustrated in FIG. 9, taken along the thickness direction (Z-axial direction in the figure) of the housing. FIG. 14 is a cross-sectional view illustrating a center of a first hinge when the openable cellular phone is in the closed state according to the embodiment of the present invention. FIG. 15 is a cross-sectional view illustrating the center of the first hinge when the openable cellular phone is in the second opened state according to the embodiment of the present invention. FIG. 16 is a partially enlarged view of FIG. 15. FIG. 17 is a cross-sectional view illustrating the center of the first hinge when the openable cellular phone is in the first opened state according to the embodiment of the present invention. FIGS. 18 to 20 are diagrams illustrating partial cross-sectional views (1) to (3) of a neighborhood of the coupling part 4 in the openable cellular phone according to this embodiment. FIG. 21 is a cross-sectional view of cables of the openable cellular phone according to the embodiment of the present invention, in which FIG. 21 (a) illustrates a state where the cables are in the second hinge, and FIG. 21 (b) is a state immediately after the cables are escaped from the second hinge.

As illustrated in FIG. 1, an openable cellular phone (hereinafter referred to as "main body") 1 according to this embodiment roughly includes a substantially box-like upper housing 2 (second housing), a substantially box-like lower housing 3 (first housing), and the coupling part 4 that openably and closably couples the upper and lower housings 2 and 3 together, to configure the main body 1. Through the rotating operation of the coupling part 4, the main body 1 is coupled to be openable or closable about an axial core a (first rotating axis) in a direction of an arrow A (first rotating direction), and about an axial core b (second rotating axis) in a direction of an arrow B (second rotating direction) orthogonal to the direction of the arrow A.

During carrying, as illustrated in FIG. 1(a), the main body 1 is used in a superposed state (closed state or close state) where the upper housing 2 and the lower housing 3 configuring the main body 1 are superposed on each other. For example, during calling, when characters, figures, or phone numbers are input, as illustrated in FIG. 1(b), the main body 1 is used in a first opened state (first open state or vertically opened state) where the upper housing 2 is rotated about the axial center a in the direction of the arrow A (or first rotating direction) relative to the lower housing 3, from the closed state. For example, when TV is watched on a horizontally long screen, as illustrated in FIG. 1(c), the main body 1 is used in a second opened state (second open state or vertically opened state) where the upper housing 2 is rotated about the axial center b in the direction of the arrow B (or second rotating direction which is orthogonal to the first direction) relative to the lower housing 3, from the closed state.

Subsequently, the respective components of the main body 1 in the openable cellular phone according to this embodiment will be described with reference to FIGS. 1 to 3.

The upper housing 2 accommodates a receiver 5, a speaker 6, a first display part 7, a second display part 8, a first camera part 9, a first Hall effect sensor 10, a second Hall effect sensor 11, and a first printed circuit board 12 that is a first electric circuit part therein. The first display part 7 is disposed on a main surface 2A side of the upper housing 2. The second display part 8 is disposed on a rear surface 2B opposite to the main surface 2A.

The lower housing 3 accommodates a transmitter (microphone) 13, an operating part 14, a second camera part 15, a first magnet 16, an antenna 17, a second printed circuit board 18 that is a second electric circuit part, a UIM card loading part 19, and a detachably attachable battery 20 therein. On the second printed circuit board 18 are mounted a radio circuit part 21, a data converter 22, a voice processor 23, an image processor 24, an information recorder 25, and a controller 26 (indicated by a two-dot chain line in FIG. 2). Also, the second printed circuit board 18 is formed with a feeder (not shown), and the feeder is connected with the antenna 17. Among those components, the operating part 14 exposed when the main body 1 is in the first or second open state is disposed on a main surface 3A of the lower housing 3. A battery cover 27 configures a part of a rear surface 3B opposite to the main surface 3A, and is detachably attached thereto.

The coupling part 4 is equipped with a first coupling part (first rotating device or first hinge) 28 and a second coupling part (second rotating device or second hinge) 29, and the upper housing 2 and the lower housing 3 are rotatably coupled with each other. Also, wiring members (cables) 32 having flexibility pass through the coupling part 4. Each of the cables 32 has one end inserted into a first connector 30 disposed on a surface of the first printed circuit board 12, and the other end inserted into a second connector 31 disposed on a surface of the second printed circuit board 18 to electrically connect the first printed circuit board 12 and the second printed circuit board 18. A plurality of the cables 32 is provided, and passes through a cylindrical tube member 33 formed of fibers which are made of polyester. A second magnet 34 is disposed within the coupling part 4 so as to face the second Hall effect sensor 11 in the closed state and in the first open state.

Subsequently, the lower housing 3 will be described in detail. The microphone 13 is disposed on the main surface 3A of the lower housing 3, and opposed to and covered with the upper housing 2 when the main body 1 is in the closed state, so as be exposed when the main body 1 is in the first or second open state. During calling, a voice of a user is transmitted to a communication partner.

The operating part 14 is arranged on the main surface 3A of the lower housing 3. For the sake of inputting phone numbers or characters, figures, characters, and symbols are printed on the operating part 14. The operating part 14 includes a plurality of operation buttons that enables call receiving or call ending, control of a volume output from the receiver 5 or the speaker 6, changeover to a manner mode, and selection and decision on a menu screen.

The second camera part 15 is arranged on the rear surface 3B side opposite to the main surface 3A in the vicinity of the second printed circuit board 18. In the first open state, the second camera part 15 can images a backward of the first display part 7. When there is an object in front of the user, the user can confirm a shot image displayed on the first display part 7 while shooting.

The second camera part 15 and the above-mentioned first camera part 9 each allow an incident light from the taken object to be converted from an optical signal into an electric signal by a photoelectric conversion element such as a CCD (charge coupled device) after passing through a lens group, to generate image information. The image information is processed by the image processor 24 to generate an image on the first display part 7. Also, the taken image can be recorded in a phone book together with the phone numbers. When a call is received from a partner who saves an image, the image associated with an appropriate phone number is displayed on the second display part 8 if the main body 1 is in the closed state, or on the first display part 7 if the main body 1 is in the first or second open state. If the associated image is a face image, a caller can be recognized with easy (at one view).

For that reason, the first display part 7, the second display part 8, the first camera part 9, and the second camera part 15 are connected to the image processor 24, and the image information taken by the first camera part 9 and the second camera part 15 is recorded in the information recorder 25 by conducting a given operation. The information recorder 25 can record character information which is being produced or which is included in a transmitted or received mail, other than the image information taken by the first camera part 9 and the second camera part 15.

The antenna 17 is arranged within the upper housing 2. The antenna 17 has a resonance point in any one of 900 MHz band, and 1.8 GHz band, 1.9 GHz band, which are bandwidths of the GSM system, and 2 GHz band which is a bandwidth of the W-CDMA system. The antenna 17 conducts transmission and reception in any one bandwidth or plural bandwidths thereof. Also, the antenna 17 may receive digital television broadcast or radio broadcast, or be used as a transmitter and receiver antenna for near field communication.

The second printed circuit board 18 is disposed below the operating part 14 in the periphery of the second camera part 15, and partially equipped with a connector (not shown) connected to the UIM card loading part 19 and the battery 20.

The controller 26 is connected to the operating part 14, the first Hall effect sensor 10, the second Hall effect sensor 11, the radio circuit part 21, the data converter 22, the image processor 24, and the information recorder 25, and controls those components. Further, the controller 26 is connected to the UIM card loading part 19 and the battery 20.

The radio circuit part 21 is connected to the antenna 17, and configured to process data received by the antenna 17 and output the data to the data converter 22. The data converter 22 is connected the voice processor 23, and the voice processor 23 is connected to the receiver 5, the speaker 6, and the microphone 13.

Accordingly, the data converter 22 converts received data from the antenna 17 through the radio circuit part 21 and the controller 26 into voice data, and outputs the voice data to the voice processor 23.

The voice processor 23 decodes the voice data to generate a voice signal, and then outputs the voice signal to the receiver 5 and the speaker 6. The receiver 5 and the speaker 6 output a voice corresponding to the voice signal transmitted from the voice processor 23.

Also, the voice processor 23 encodes the voice received by the microphone 13 to generate the voice data, and then outputs the voice data to the data converter 22. The data converter 22 converts the input voice data into communication data, and then outputs the communication data to the radio circuit part 21. The radio circuit part 21 processes the received communication data, and transmits the communication data from the antenna 17 as a radio wave of a radio signal.

Subsequently, the first Hall effect sensor 10 and the second Hall effect sensor 11 will be described. When the main body 1 is in the closed state, because the first Hall effect sensor 10 is close to the first magnet 16, the first Hall effect sensor 10 detects a magnetic field of the first magnet 16, and outputs a detection signal to the controller 26. Also, when the main body 1 is in the first open state or the second open state, the first Hall effect sensor 10 is far from the first magnet 16, and therefore cannot detect the magnetic field of the first magnet 16. As a result, the first Hall effect sensor 10 generates no detection signal.

When the main body 1 is in the closed state or the first open state, because the second Hall effect sensor 11 is close to the second magnet 34, the second Hall effect sensor 11 detects a magnetic field of the second magnet 34, and outputs a detection signal to the controller 26. Also, when the main body 1 is in the second open state, the second Hall effect sensor 11 is far from the second magnet 34, and therefore cannot detect the magnetic field of the second magnet 34. As a result, the second Hall effect sensor 11 generates no detection signal.

That is, when the first Hall effect sensor 10 detects the first magnet 16, and the second Hall effect sensor 11 detects the second magnet 34, the main body 1 is in the first closed state. When the first Hall effect sensor 10 does not detect the first magnet 16, and the second Hall effect sensor 11 detects the second magnet 34, the main body 1 is in the first open state. If the first Hall effect sensor 10 does not detect the first magnet 16, and the second Hall effect sensor 11 does not also detect the second magnet 34, the main body 1 is in the second open state.

When the main body 1 changes from the closed state to the first open state or the second open state, the operating part 14 and the first display part 7 are exposed, and a light source for lighting the operating part 14 and a light source for lighting the first display part 7 turn on. Unless the operating part 14 is not operated for a given time, the light sources turn off. When the main body 1 changes from the opened state to the closed state, both of the light sources for lighting the operating part 14 and the first display part 7 turn off, and a power consumption is reduced. Also, when the main body 1 receives a call in the closed state, partner information is displayed on the second display part 8. When the user brings the main body 1 in the first open state in order to receive the call, information displayed on the second display part 8 is not displayed. Instead, information is displayed on the first display part 7. Thus, how to display is variously controlled according to the situation of the main body 1.

The cables 32 electrically connect the first printed circuit board 12 and the second printed circuit board 18. Under the control of the controller 26, a signal for outputting the voice from the receiver 5 or the speaker 6, and a signal for displaying the image taken by the first camera part 9 or the second camera part 15 on the first display part 7 are transmitted or received. The tube member 33 has both ends fixed to the cables 32 by a tape 34 (only one end shown in FIG. 2). Because the tube member 33 is expanded and contracted, the tube member 33 is fixed to the cables 32 for the purpose of preventing the tube member 33 from arbitrarily moving relative to the cables 32 when the tube member 33 is assembled into the main body 1.

Subsequently, the coupling part 4 will be described in detail with reference to FIGS. 2, 4, and 5. As illustrated in FIG. 4, the second coupling part 29 accommodated in the coupling part 4 includes a rotating shaft member 41, a retention member 42, a cam member 43, a first spring member 44, a cylindrical member 45, a flat member 46, a retaining ring 47, a moving member 48, and a second spring member 49. A fitting member (bearing member or movement controller) 50 that is nonrotatably fitted to the lower housing 3 is arranged adjacent to the second coupling part 29.

The rotating shaft member 41 includes a small-diameter part 51, a groove part 52 which is formed in the small-diameter part 51, a large-diameter part 53 which is larger in diameter than the small-diameter part 51, an arm part 54 which is formed to be orthogonal to the large-diameter part 53, a first screw hole part 57 and a second screw hole part 58 which are formed in the arm part 54, and fixed to the upper housing 2 by screws 55 and 56, and a first through-hole 59 which penetrates the small-diameter part 51 and the large-diameter part 53. The large-diameter part 53 has a notch surface 60 (refer to FIG. 14). The large-diameter part 53 is formed between the small-diameter part 51 and the arm part 54.

The retention member 42 includes a second through-hole 61 and a third through-hole 62 which rotatably hold and bear the small-diameter part 51 of the rotating shaft member 41, an accommodation part 63 that accommodates and holds the moving member 48, a third screw part 64, a first protrusion part 65, and a second protrusion part 66. To the small-diameter part 51 that passes through the second through-hole 61 are fitted the cam member 43 fitted to be rotatable together with the small-diameter part 51, the first spring member 44, the cylindrical member 45, and the flat member 46. Thereafter, the large-diameter part 53 is abutted against the retention member 42 so that a tip of the small-diameter part 51 does not penetrate the third through-hole 62.

The retaining ring 47 is fitted to the groove part 52, and the rotating shaft member 41 is rotatably fitted to the retention member 42. The rotating shaft member 41 is held so as not to drop out of the retention member 42.

The first spring member 44 is configured by superposing a plurality of disc springs on each other in a series arrangement.

The cylindrical member 45 is disposed to surround the first spring member 44. Since the cylindrical member 45 surrounds the first spring member 44, dust is prevented from entering an interior of the first spring member 44 during assembling. Also, the entire first spring member 44 having the plurality of disc springs is prevented from being extremely deformed to be flattened by exertion of a force for allowing the rotating shaft member 41 to drop out of the retention member 42 (the first spring member 44 is prevented from being permanently deformed). The cam member 43 generates click when the rotating shaft member 41 rotates. For that reason, the cam member 43 is disposed movably in a thrust direction of the small-diameter part 51. A first concave-convex surface 67 which is concave-convex shaped is formed on one side of the cam member 43. An opposite surface of the first concave-convex surface 67 is urged by the first spring member 44. A second concave-convex surface 68 which is concave-convex shaped is also formed on the retention member 42 facing the concave-convex surface 67. When the cam member 43 rotates together with the rotating shaft member 41 from a state where convexes of the first concave-convex surface 67 face concaves of the second concave-convex surface 68, the cam member 43 is escaped from the state where the convexes of the first concave-convex surface 67 face the concaves of the second concave-convex surface 68, and the convexes of the first concave-convex surface 67 face the convexes of the second concave-convex surface 68. During the escape, the deflection of the first spring member 44 increases to generate click. Also, when the convexes of the first concave-convex surface 67 face the concaves of the second concave-convex surface 68 from the state where the convexes of the first concave-convex surface 67 face the convexes of the second concave-convex surface 68, the deflection of the first spring member 44 decreases to generate click.

That is, when the rotating shaft member 41 rotates, a rapid change of the torque required for rotation is obtained as click feeling. The click is generated when a transition from the closed state to the second open state starts, and when the transition to the second open state is completed. The user feels the click at the time of starting the transition and at the time of completing the transition when the state transitions from the closed state to the second open state. Also, the user also feels the click at the time of starting the transition and at the time of completing the transition when the state transitions from the second open state to the closed state.

The flat member 46 is provided in order that a corner 44A of the disc springs configuring the first spring member 44 is not abutted directly against the retaining ring 47. Also, a hole 69 is provided, and the small-diameter part 51 is inserted through the hole 69.

The corner 44A of the disc springs is circular, and the retaining ring 47 has a notched opening 70. The provision of the opening 70 prevents given deflection from being not generated such that the corner 44A of the disc springs drops and is inclined.

Now, the operation of the flat member 46 will be described with reference to FIG. 5. As illustrated in FIG. 5(a), since the flat member 46 is provided, an entire periphery of the corner 44A at an inner diameter side of a disc spring of the first spring member 44, which is arranged closest to the retaining ring 47, is abutted against a first flat surface 46A of the flat member 46. Even if a corner 44B at an outer diameter side of the disc spring is arranged closest to the retaining ring 47, an entire periphery of the corner 44A is abutted against the first flat surface 46A of the flat member 46. On the other hand, as illustrated in FIG. 5(b), if the flat member 46 is not provided, a part of the corner 44A at the inner diameter side of the disc spring of the first spring member 44, which is arranged closest to the retaining ring 47, drops in the opening 70 of the retaining ring 47. For that reason, as illustrated in FIG. 5(b), the disc springs are inclined. When the disc springs are inclined, the first spring member 44 in which a plurality of disc springs is superposed on each other is not deflected by a given amount. For that reason, since the cam member 43 is not urged by a given load, the cam member 43 that rotates together with the rotating shaft member 41 does not generate a given sliding torque and desired click.

Accordingly, with the provision of the flat member 46, the second coupling part 29 is downsized while minimizing a variation of the generated torque without sacrificing the stability of the torque, such that the stabilized torque is generated by the rotating shaft member 41 by given deflection of the first spring member 44.

If the urging force generated by the first spring member 44 is applied perpendicularly to a surface of the retaining ring 47 on the first spring member 44 side, the first spring member 44 can be deflected by a given amount. Thus, a component having both of one side surface facing the first spring member 44 side and the other side surface facing the retaining ring 47 side, which are parallel to the retaining ring 47 may be appropriately added between the first spring member and the retaining ring 47.

The first flat surface 46A of the flat member 46, the retaining ring 47 that is adjacently abutted against a second flat surface 46B parallel to the first flat surface 46A, which is a rear surface of the first flat surface 46A, an end surface 52A of the groove 52 having the retaining ring 47 fitted thereto, which is far from the first spring member 44, the opposite surface of the first concave-convex surface 67 of the cam member 43 are all parallel to each other, and perpendicular to the axial core b of the rotating shaft member 41. For that reason, since the corner 44A at the inner diameter side of the disc spring of the first spring member 44, which is arranged closest to the retaining ring 47, is abutted against the first flat surface 46A, a reaction force of the first spring member 44 can be exerted in the thrust direction of the small-diameter part 51. Accordingly, the urging force of the first spring member 44 is exerted perpendicularly (parallel to axial core b) on the end surface 52A and the opposite surface of the first concave-convex surface 67. At least the rear surface of the first concave-convex surface 67 and the end surface 52A are normal to the axial core b, and the first flat surface 46A and the rear surface of the first concave-convex surface 67 are configured by planes against which all the corners of the first spring member 44 are abutted. In this case, if a component that transmits the urging force of the spring is interposed between the flat member 46 and the retaining ring 47, the first spring member 44 generates a given urging force, the rotating shaft member 41 rotates with a given torque, and the cam member 43 generates a desired click.

As described above, the corner 44A at the inner diameter side of the disc spring of the first spring member 44, which is arranged closest to the retaining ring 47, must be abutted against the flat member 46. Therefore, a gap (backlash) between an outline of the small-diameter part 51 and the hole 69 must be set taking an assembling property into account. That is, the gap may be appropriately set so that even if the backlash is maximized, the corner 44A at the inner diameter side of the disc spring of the first spring member 44, which is arranged closest to the retaining ring 47, is surely abutted against the flat member 46.

When the retaining ring 47 is fitted to the groove part 52 while the opening 70 is deformed to be widened, the first spring member 44 is deflected by a given amount, and urges the cam member 43 toward the retention member 42.

That is, when the retaining ring 47 is fitted to the groove part 52 while the opening 70 of the retaining ring 47 is deformed to be widened, the retention member 42 retains the cam member 43, the first spring member 44, the retaining ring 47, and the flat member 46 therebetween. This is not a cantilever state but a both-end support state. With this configuration, since the retention member 42 can increase a retention length L1 (length from the rear surface of the first concave-convex surface 67 to the end surface 52A as illustrated in FIG. 2) that retains the small-diameter part 51, a deflection of the rotating shaft member 41 relative to the retention member 42 is reduced.

In a state where the retaining ring 47 is fitted to the groove part 52, the large-diameter part 53 is urged and abutted against an inlet of the second through-hole 61 by the aid of the urging force of the first spring member 44, and the flat member 46 is urged and abutted against the retaining ring 41. Therefore, the small-diameter part 51 is fitted to the retention member 42 with no slight movement (no backlash) in the thrust direction of the rotating shaft member 41.

The moving member 48 includes a protrusion 72, a leg 73, and a cylinder 74. The moving member 48 is accommodated into the accommodation part 63 of the retention member 42 while the cylinder 74 is inserted into the second spring member (coil spring) 49. The protrusion 72 is formed in a tip of the moving member 48 in an urging direction of the second spring member 49. In a state where the moving member 48 is accommodated in the accommodation part 63, the moving member 48 is urged in a direction of an arrow C by the second spring member 49, and the protrusion 72 is protruded from the accommodation part 63 of the retention member 42. The protrusion 72 protruded from the accommodation part 63 is adjacent to the second protrusion part 66 formed on the inlet of the accommodation part 63.

The bearing member 50 is disposed to straddle the lower housing 3 and the coupling part 4 so as to be fixed to the lower housing 3, and rotatably fitted to the coupling part 4. The bearing member 50 includes a fourth through-hole 75 and the first catching part 76 formed on a tip side thereof. The first catching part 76 is abutted against the leg 73 when the main body is in the first open state, and moves the moving member 48 toward a direction opposite to the direction of the arrow C illustrated in FIG. 4.

The configuration of the bearing member 50 will be described with reference to FIGS. 6 and 7. FIG. 6 is a perspective view (1) of the bearing member 50, and FIG. 7 is a perspective view (2) of the bearing member 50 viewed from an opposite side of FIG. 6 in the thickness direction of the housing. The bearing member 50 is made of a metal material. The bearing member 50 includes a cylindrical bearing member main body 110, and a fitting part 120 extending from the bearing member main body 110 in a longitudinal direction of the housing (X-axial direction in the figure).

The cylindrical bearing member main body 110 has the fourth through-hole 75 therein. Also, the cylindrical bearing member main body 110 has, on one end side of the bearing member main body 110, the first catching part 76 that is formed along a circumferential direction of the bearing member main body 110, and protruded along the axial core a, and a second catching part 111 that is formed at a given distance from the first catching part 76 along the circumferential direction, and protruded from the axial core a.

The cylindrical bearing member main body 110 has, on the other end side of the bearing member main body 110, the large-diameter part 112 formed by a given distance along the circumferential direction of the bearing member main body 110, and having a uniform thickness along a diameter direction of the bearing member main body 110.

The large-diameter part 112 includes a first extension part 11A that extends along a long axis direction of the cylindrical bearing member main body 110, and a second extension part 11B that extends from the other end of the large-diameter part 112 along the axial direction of the cylindrical bearing member main body 110, and is continuous with the fitting part 120.

Also, as illustrated in FIG. 7, the large-diameter part 112 forms a step on an outer periphery of the cylindrical bearing member main body 110.

One side surface 112D of the large-diameter part 112 which extends along the axial direction of the cylindrical bearing member main body 110 is fixedly abutted against a protrusion 301 that protrudes from the lower housing 3 into the housing, as will be described later.

Also, as illustrated in FIG. 6, the fitting part 120 has a tip extended along a lateral direction of the housing (Y-axial direction in the figure), and has a screw hole part 121 for fixing the tip to the lower housing 3 with a screw.

Subsequently, a method of assembling the bearing member 50 into the lower housing 3 will be described with reference to FIGS. 8 to 13.

Now, an appearance of the lower housing 3 when the bearing member 50 is assembled into the lower housing 3 will be described with reference to FIGS. 8, 10(a), and 12. FIG. 8 is a diagram illustrating the interior of the lower housing 3 when the bearing member 50 is assembled into the lower housing 3. FIG. 10(a) is a diagram illustrating a cross section of the lower housing 3 including the large-diameter part 112 of the bearing member 50 illustrated in FIG. 8, taken along a thickness direction (Z-axial direction in the figure) of the housing. FIG. 12 is a diagram illustrating a cross section of the coupling part 4 including the first catching part 76 of the bearing member 50 illustrated in FIG. 8, taken along the thickness direction (Z-axial direction in the figure) of the housing. FIG. 11 is a diagram illustrating a cross section (cross section taken along an X-Z direction) passing through a claw part 3G and the cables 32 illustrated in FIG. 8.

As illustrated in FIG. 8, when the bearing member 50 is assembled into the lower housing 3, the bearing member 50 rotates in a direction of an arrow F illustrated in FIG. 8 from a state where the fitting part 120 is held at a given angle to the lower housing 3, and is assembled into the lower housing 3.

Also, as illustrated in FIG. 10(a), when the bearing member 50 (movement controller) is assembled into the lower housing 3, at the other end of the bearing member main body 110, one side surface 112D of the large-diameter part 112 is spaced from the protrusion 301 formed integrally with the lower housing 3 and protruded toward the interior of the housing, and does not face or is not abutted against the protrusion 301. In this example, the lower housing 3 includes two partial housing members (case members) 3E and 3F, and those two partial housing members 3E and 3F are combined together to configure the lower housing 3 of a substantially box shape. Referring to FIG. 11, in those two partial housing members 3E and 3F, the claw parts 3G and 3H that are engaged with each other are provided on the partial housing members 3E and 3F adjacent to a portion that accommodates the bearing member 50 therein. Those claw parts 3G and 3H are engaged with each other so that the combined lower housing 3 is not easily separated from each other. Although not shown, claw parts (substantially the same configurations as those of 3E and 3F), which are engaged with each other, are appropriately disposed on the peripheries of the partial housing members 3E and 3F.

Further, as illustrated in FIG 12, when the bearing member 50 is assembled into the lower housing 3, at one end of the bearing member main body 110, the first catching part 76 and the second catching part 111 are inserted into a space that contacts out of the leg 73 and the retention member 42 of the rotating shaft member 41 within the coupling part 4.

Now, an appearance of the lower housing 3 after the bearing member 50 has been assembled into the lower housing 3 will be described with reference to FIGS. 9, 10(b), and 13. FIG. 9 is a diagram illustrating the interior of the lower housing 3 in the state where the bearing member 50 is assembled into the lower housing 3. FIG. 10(b) is a diagram illustrating a cross section of the lower housing 3 including the large-diameter part 112 of the bearing member 50 illustrated in FIG. 9, taken along the thickness direction (Z-axial direction in the figure) of the housing. FIG. 13 is a diagram illustrating a cross section of the coupling part 4 including the first catching part 76 of the bearing member 50 illustrated in FIG. 9, taken along the thickness direction (Z-axial direction in the figure) of the housing.

As illustrated in FIG. 9, in the state where the bearing member 50 is assembled into the lower housing 3 by rotating the bearing member 50 in the direction of the arrow F from the state illustrated in FIG. 8, the screw hole part 121 of the fitting part 120 is superposed on a screw hole part 3D provided in the lower housing 3. The screw hole part 121 of the fitting part 120 and the screw hole part 3D provided in the lower housing 3 are fastened by screws (not shown) to fix the bearing member 50 to the lower housing 3.

Also, as illustrated in FIG. 10(b), in the state where the bearing member 50 is assembled into the lower housing 3, on the other end of the bearing member main body 110, one side surface 112D of the large-diameter part 112 faces the protrusion 301 that is formed on the lower housing 3 and protruded toward the interior of the housing.

Further, as illustrated in FIG. 13, in the state where the bearing member 50 is assembled into the lower housing 3, on one end of the cylindrical bearing member main body 110, the first catching part 76 of the bearing member 50 is abutted against the leg 73 of the moving member 48 together with the rotation of the fitting part 120.

When the bearing member 50 is assembled into the lower housing 3, as illustrated in FIG. 10(b), one side surface 112D of the large-diameter part 112 faces the protrusion 301 that is formed on the lower housing 3 and protruded toward the interior of the housing. For that reason, for example, when a load is exerted on the upper housing 2 and the lower housing 3 further in the first rotating direction from the first open state illustrated in FIG. 1(b), the lower housing 3 moves in the first rotating direction while following the movement of the bearing member 50 in the first rotating direction. Accordingly, the bearing member 50 can prevent the partial housing members 3E and 3F of the lower housing 3 from being opened.

In the state where the bearing member 50 is assembled into the lower housing 3, when a position at which one side surface 112D of the large-diameter part 112 is abutted against the protrusion 301 is set to be close to a mating surface of the upper housing 2 and the lower housing 3 in the thickness direction (Z-axial direction in the figure) of the housing, the opening of the partial housing members 3E and 3F of the lower housing 3 can be surely prevented.

In the state where the bearing member 50 is assembled into the lower housing 3, when the position at which one side surface 112D of the large-diameter part 112 is abutted against the protrusion 301 is set to be close to the coupling part 4 in the lateral direction (Y-axial direction in the figure) of the housing, the opening of the partial housing members 3E and 3F of the lower housing 3 can be surely prevented.

Subsequently, the coupling part 4 will be described with reference to FIG. 14. On one end (side equipped with the coupling part 4) of the lower housing 3, a first hinge mounting part 77 of a substantially cylindrical shape is formed on an end thereof (left end in FIG. 14), and a guide part 78 of a substantially cylindrical shape is formed substantially in the center thereof.

The coupling part 4 includes a first retention part 79, a second retention part 80, and a connection part 81 that connects the first retention part 79 and the second retention part 80. The first retention part 79 is disposed between the first hinge mounting part 77 and the guide part 78.

The connection part 81 is disposed outside of the guide part 78, and the guide part 78 is interposed between the first retention part 79 and the second retention part 80 from outside. An interior of the connection part 81 is equipped with a second hinge mounting part 82 in which the second coupling part 29 is mounted. The second hinge mounting part 82 is assembled into the coupling part 4 in a direction from the upper housing 2 side toward the lower housing 3 side when the main body 1 is in the closed state, with the third screw part 64 of the second coupling part 29 in the lead. After the second coupling part 29 has been accommodated into the coupling part 4, a screw 83 is screwed into the third screw part 64, and fixed thereto.

The first coupling part 28 includes a first fixing part 28A that is nonrotatably retained by the first hinge mounting part 77, and a second fixing part 28B that is nonrotatably retained by the first retention part 79. When the upper housing 2 rotates about the axial core a illustrated in FIG. 14 in the direction of the arrow A relative to the lower housing 3, the second fixing part 28B rotates relative to the first fixing part 28A, thereby obtaining a desired sliding torque and click by a built-in click generator (not shown) and a built-in torque generator (not shown).

Symbols indicated in FIGS. 15 to 19 are identical with symbols indicated in FIG. 14, and therefore description of the symbols in FIGS. 15 to 19 will be omitted. The plurality of cables 32 is provided, but illustrated as one cable in a lump in FIGS. 15 to 19.

Subsequently, the cables 32 will be described with reference to FIGS. 2 and 21. Referring to FIG. 2, the plurality of cables 32 is provided. Although not shown, one cable 32 is configured by a coaxial thin wire having a plurality of center conductors, a first insulating layer disposed on the exterior of the center conductors, an external conductor disposed on the exterior of the first insulating layer, and a second insulating layer disposed on the exterior of the external conductor. The plurality of cables 32 passes through the tube member 33 formed into a hollow shape. The tube member 33 is obtained by braiding fibers made of polyester. Because the cross-sectional shape can be easily deformed, and both of an outer surface and an inner surface thereof have low frictional properties, the tube member 33 is made of a fibrous material.

A case in which the tube member 33 is made of, for example, a rubber material will be described. When the main body 1 is opened or closed, because the tube member 33 is scraped with other surrounding components (inner surface of the coupling part 4, first through-hole 59 of rotating shaft member 41, etc.), the tube member 33 is liable to be worn. In this case, because a surface of the rubber material is large in frictional resistance, the rubber material is scraped and worn, and perforated. For that reason, a protective tape may be generally wound around the rubber tube member. This leads to an increase of the costs.

The tube member 33 is arranged within the first through-hole 59 in a state where the plurality of cables 32 passes through the hollow portion thereof. One end of the tube member 33 is led to the interior of the upper housing 2 after escaped from the first through-hole 59. The other end of the tube member 33 is bent at about 90 degrees after being escaped from the first through-hole 59, and led to the lower housing 3 side through the fourth through-hole 75 of the bearing member 50. In the neighborhood of a site at which the plurality of cables 32 is bent at 90 degrees, for example, if the plurality of cables 32 is bundled by an adhesive tape, the bundled plural cables 32 are difficult to bend with the result that the produced radius of curvature R is increased. Even if the radius of curvature R is large, in order to wire the bundled plural cables 32 within the coupling part 4, a distance L2 from the first through-hole 59 to an inner surface 4A of the coupling part 4 must be also increased. As a result, the coupling part 4 and the entire main body 1 must be upsized.

Under the circumstances, in this embodiment, the plurality of cables 32 merely passes through the tube member 33 without being bundled. For that reason, as illustrated in FIG. 21(a), the plurality of cables 32 is arranged substantially in a circle, and extended in parallel. The tube member 33 is also linearly arranged. In this example, when it is assumed that a diameter of the tube member 33 is D, a relationship that the diameter of the tube member 33 is larger a distance L2 from the above-mentioned first through-hole 59 to the inner surface 4A of the coupling part 4 (D>L2) is satisfied. Also, since the plurality of cables 32 passes through a space having the distance L2 from the first through-hole 59 to the inner surface 4A of the coupling part 4 immediately after the plurality of cables 32 has been escaped from the first through-hole 59, the cables 32 is formed substantially in a circle. The tube member 33 is also elliptically deformed. A short axis side of the tube member 33 is substantially equal to the distance L2.

As described above, since the plurality of cables 32 is disposed within the tube member 33 whose cross section is deformable, and arranged in the space narrower than the diameter of the tube member 33 after being bent at 90 degrees, the radius of curvature produced when the cables 32 are bent can be reduced. Hence, since the wiring space can be reduced, the main body 1 can be prevented from being upsized.

Subsequently, the operation of the openable cellular phone according to the embodiment will be described with reference to FIG. 1. The user selects any one of the closed state (FIG. 1(a)), the first open state (FIG. 1(b)), and the second open state (FIG. 1 (c)).

When the main body 1 is powered on, a standby operation starts. The standby operation can be switched to a camera mode or a TV mode by operating the operating part 14.

In the camera mode, the mode is switched by starting the second camera part 15. When the second camera part 15 starts, an image taken by the second camera part 15 can be displayed on the first display part 7, and when the taken image is saved, the image can be recorded in the information recorder 25.

In the TV mode, when a TV broadcast is received, TV viewing is enabled by the first display part 7. Because a TV image is of a landscape-oriented screen size, it is desirable that the TV image is viewed on the landscape-oriented screen. In this case, the upper housing 2 is opened about the axial core b illustrated in FIG. 1(c) in the direction of the arrow B relative to the lower housing 3 to bring the main body 1 into the second open state, and the operating part 14 is held at the near side of the user. With this arrangement, the first display part 7 can be viewed as the landscape-oriented screen, which is a mode suitable for the TV viewing.

When an incoming call is received in the respective modes, in order to announce the incoming call, a ringtone is output from the speaker 6. In this situation, when the upper housing 2 is rotated in the direction A illustrated in FIG. 1(b) to bring the main body 1 into the first open state, and a given operation is conducted, the incoming call can be received. A voice of the user is output from the microphone 13.

Upon completing the call, the mode immediately before the call reception is restarted.

During carrying, the closed state is preferred.

Subsequently, the operation when the main body 1 is opened and closed will be described with reference to FIG. 14. Referring to FIG. 14, since the main body 1 is in the closed state, the first catching part 76 of the bearing member 50 is abutted against the leg 73 of the moving member 48 to move the moving member 48 in a direction opposite to the direction of the arrow C (refer to FIG. 4). FIG. 14 illustrates a state in which the moving member 48 is buried in the accommodation part 63. Since the protrusion 72 of the moving member 48 does not face the notch surface 60 of the large-diameter part 53 of the rotating shaft member 41, the rotating shaft member 41 can be rotated about the axial core b in the direction of the arrow B illustrated in FIG. 14.

Subsequently, a description will be given of the operation of the respective members when the upper housing 2 is rotated about the axial core b in the direction of the arrow B relative to the lower housing 3 from the closed state illustrated in FIG. 1(a) to come into the second open state illustrated in FIG. 1(c), with reference to FIGS. 15 and 16. FIG. 15 illustrates a state (second open state) in which the rotating shaft member 41 is rotated about the axial core b in the direction of the arrow B by about 170 degrees from the state (closed state) of FIG. 14. The large-diameter part 53 of the rotating shaft member 41 passes the tip side of the protrusion 72 of the moving member 48, and comes into the second open state. The notch surface 60 is abutted against the first protrusion part 65 formed on the retention member 42 so that the rotating shaft member 41 can be rotated by no more than a given angle (170 degrees in this embodiment). In the second open state, the large-diameter part 53 covers a head of the protrusion 72 of the moving member 48.

That is, the first catching part 76 of the bearing member 50 is abutted against the leg 73 of the moving member 48, and the bearing member 50 moves the moving member 48 in the direction opposite to the direction of the arrow C against the urging force of the second spring member 49, and draws into the accommodation part 63. Then, the large-diameter part 53 of the rotating shaft member 41 is configured to cover the tip of the protrusion 72 of the moving member 48 at the arrow C side.

FIG. 16 is a partial enlarged diagram of FIG. 15. Referring to FIG. 16, in the second open state, the large-diameter part 53 covers a part (head portion) of the protrusion 72 of the moving member 48, and the covered site is indicated by a shaded area 72A.

Subsequently, the operation of the bearing member 50 will be described with reference to FIGS. 17 to 20. FIG. 17 is a cross-sectional view illustrating the center of the first hinge when the openable cellular phone is in the first opened state according to the embodiment of the present invention. FIGS. 18 to 20 are partial cross-sectional views (1) to (3) illustrating a neighborhood of the coupling part 4 of the openable cellular phone according to this embodiment. FIG. 18 is a diagram when the upper housing 2 rotates about the axial core a in the direction of the arrow A by 0 degrees relative to the lower housing 3. FIG. 19 is a diagram when the upper housing 2 rotates about the axial core a in the direction of the arrow A by 30 degrees relative to the lower housing 3. FIG. 20 is a diagram when the upper housing 2 rotates about the axial core a in the direction of the arrow A by 90 degrees relative to the lower housing 3.

FIG. 17 illustrates a state in which the lower housing 3 rotates about the axial core a in the direction opposite to the direction of the arrow A relative to the upper housing 2, which is identical with a state in which the upper housing 2 rotates about the axial core a in the direction of the arrow A relative to the lower housing 3 without rotating the upper housing 2 about the axial core b in the direction of the arrow B relative to the lower housing 3 from the state (closed state) illustrated in FIG. 14.

The bearing member 50 is rotatably held by the guide part 78 of the lower housing 3, and also rotatably held by the second retention part 80 of the coupling part 4. Therefore, when the upper housing 2 rotates about the axial core a in the direction of the arrow A by a given angle relative to the lower housing 3, the bearing member 50 rotates about the axial core a in the direction opposite to the direction of the arrow A by a given angle relative to the coupling part 4. As a result, the first catching part 76 of the bearing member 50 is moved away from the leg 73.

In this embodiment, the first catching part 76 of the bearing member 50 is pressed against the leg 73 of the moving member 48 against the urging of the second spring member 49 until the upper housing 2 rotates by 30 degrees relative to the lower housing 3 as illustrated in FIG. 19, in the direction opposite to the direction to the arrow A along which the bearing member 50 rotates about the axial core a relative to the coupling part 4, from the closed state illustrated in FIG. 18.

Also, the protrusion 72 is accommodated within the retention member 42 while the first catching part 76 is pressed against the leg 73. For that reason, the upper housing 2 is rotatable about the axial core b in the direction of the arrow B relative to the lower housing 3. That is, the main body 1 can transition to the second open state (refer to FIG. 1(c)) until the upper housing 2 rotates by 30 degrees relative to the lower housing 3 as illustrated in FIG. 19.

Then, the bearing member 50 further rotates about the axial core a in the direction opposite to the direction of the arrow A relative to the coupling part 4 from a state illustrated in FIG. 19, and the first catching part 76 of the bearing member 50 is moved away from the leg 73 of the moving member 48 as the main body 1 transitions to a state (first open state, refer to FIG. 1(b)) illustrated in FIG. 20. The moving member 48 moves in a direction along which the protrusion 72 is protruded from the retention member 42 by the aid of the urging of the second spring member 49 while the bearing member 50 is moved from the moving member 48.

Since the protruded protrusion 72 is abutted against the notch surface 60, the upper housing 2 does not rotate about the axial core b in the direction of the arrow B. That is, when the main body 1 is in the first open state, the rotating operation of the upper housing 2 relative to the lower housing 3 is controlled so that the upper housing 2 does not rotate about the axial core b in the direction of the arrow B relative to the lower housing 3.

As described above, the bearing member 50 functions as a movement controller that controls a position of the moving member 48 by rotating the bearing member 50 per se about the axial core a in the direction opposite to the direction of the arrow A by a given angle relative to the coupling part 4. The bearing member 50 further controls the operation of rotating the upper housing 2 about the axial core b in the direction of the arrow B relative to the lower housing 3.

Also, as described above, one side surface 112D of the large-diameter part 112 of the bearing member 50 is abutted against the protrusion 301 that is formed on the lower housing 3, and protruded toward the interior of the housing. For that reason, when a load is further exerted on the upper housing 2 and the lower housing 3 in the first rotating direction from the first open state illustrated in FIG. 1(b), and the upper housing 2 rotates about the axial core a in the direction of the arrow A relative to the lower housing 3, the lower housing 3 moves in the first rotating direction while following the movement of the bearing member 50 in the first rotating direction. Accordingly, the bearing member 50 can prevent the upper housing 2 and the lower housing 3 from being opened.

That is, the bearing member 50 according to this embodiment permits the rotation of the upper housing 2 about the axial core a in the direction of the arrow A, which is perpendicular to the axial core b in the direction of the arrow B relative to the lower housing 3 while regulating the rotation of the upper housing 2 about the axial core b in the direction of the arrow B relative to the lower housing 3 by permitting the movement of the moving member 48 under a given condition, thereby enabling the opening of the upper housing 2 or the lower housing 3 to be prevented.

That is, the bearing member 50 controls the position of the moving member 48 against the urging force of the second spring member 49 according to the housing situation of the main body 1. Also, since the protrusion 72 is adjacent to the second protrusion part 66, when the upper housing 2 is intentionally or unexpectedly rotated about the axial core b in the direction opposite to the direction of the arrow B, the protrusion 72 is abutted against both of the notch surface 60 and the second protrusion part 66. In this situation, when abutment is conducted by a large force, the protrusion 72 is damaged. Therefore, the protrusion 72 is configured to be abutted against the second protrusion part 66 so that the protrusion 72 is not damaged even if the protrusion 72 is subjected to the force from the notch surface 60.

That is, in the state where the protrusion 72 is protruded from the accommodation part 63, when the protrusion 72 is subjected to the force from the notch surface 60, the protrusion 72 becomes in a so-called cantilever state, and a bending moment occurs. In order that the protrusion 72 is not damaged by the bending moment, it is good to upsize the moving member 48 or use a material large in an allowable stress. On the other hand, this causes upsizing and an increase in the costs.

Under the circumstances, in this embodiment, a surface of the moving member 48 opposite to the surface that is subjected to the force can be abutted against the second protrusion part 66 so that no bending moment occurs. Therefore the moving member 48 is prevented from being upsized and increasing in the costs. That is, the force exerted on the protrusion 72 changes from a bending force to a compression force. Since a material resistant to the compression force is rich, the moving member 48 can be made of a general-purpose material.

Subsequently, a third open state of the main body 1 will be described with reference to FIG. 1(d). When the user malfunctions to rotate the upper housing 2 about the axial core a in the direction of the arrow A relative to the lower housing 3 from the second open state illustrated in FIG. 1(c), the first catching part 76 of the bearing member 50 moves away from the leg 73 of the moving member 48. With moving away, the moving member 48 tries to move in the direction of the arrow C due to the urging of the second spring member 49. However, since a part (head portion) of the moving member 48 is covered with the large-diameter part 53, the moving member 48 cannot move in the direction of the arrow C. Unless the head portion of the moving member 48 is covered with the large-diameter part 53, the moving member 48 moves in the direction of the arrow C. As the situation of the main body 1, the upper housing 2 rotates in both of the direction A and the direction B relative to the lower housing 3, and the situation of the main body 1 illustrated in FIG. 1(d) is called "third open state". In the third open state, since the first display part 7 does not face the user side, the user cannot view display information displayed on the first display part 7. Under the circumstances, in order that the user releases the third open state, the upper housing 2 has merely to be rotated in the direction opposite to any one of the direction A and the direction B relative to the lower housing 3. In a configuration where the upper housing 2 is rotated in only any one of the direction A and the direction B relative to the lower housing 3, there is a case in which the user applies a force in a nonrotatable direction in error to damage the main body 1.

As in this embodiment, in the third open state, the moving member 48 is covered with the large-diameter part 53 so as not to be movable in the direction along which the moving member 48 is protruded. Therefore, if the upper housing 2 is rotated in any one of the direction opposite to the direction of the arrow A about the axial core a and the direction opposite to the direction of the arrow B about the axial core b relative to the lower housing 3 from the third open state, the situation of the main body 1 can be changed to any one of the first open state and the second open state. If the main body 1 is changed to the first open state, the bearing member 50 moves to protrude the protrusion 72, and the protruded protrusion 72 is abutted against the notch surface 60 as described above. Therefore, the upper housing 2 cannot rotate about the axial core b in the direction of the arrow B relative to the lower housing 3. Hence, the main body 1 does not return to the third open state from the second open state.

From the above description, the retention member 42 is configured to retain the small-diameter part 51 of the rotating shaft member 41 at the longest distance L1 of the coupling part 4. Therefore, backlash of the rotating shaft member 41 can be reduced. Even if a force is applied from the external, since the rotating shaft member 41 is retained at the long distance L1, an increase in the backlash can be reduced.

Also, in the first open state, since the moving member 48 is protruded and abutted against the large-diameter part 53, even if the upper housing 2 is tried to rotate about the axial core b in the direction of the arrow B, the upper housing 2 can be prevented from being rotated. Moreover, in the closed state, this operation is easily conducted when the upper housing 2 is tried to rotate about the axial core b in the direction of the arrow B. If the user brings the main body 1 in the third open state in error, the main body 1 can easily metamorphose into both of the first open state and the second open state. If the main body 1 is metamorphosed into the first open state, a change of the state to the third open state is prevented. Thus, the present invention can provide the user-friendly main body 1.

That is, the moving member 48 interlocked with the state of the main body 1 is disposed within the second coupling part 29 so that the situation of the openable cellular phone 1 does not change from the first open state to the third open state. Therefore, when the user calls while applying his head to the upper housing 2 in the first open state, the upper housing does not rotate despite the user's intention.

Also, since the plurality of cables 32 that electrically connects the upper housing 2 and the lower housing 3 is wired in the tube member 33 having a deformable cross section, a wiring space can be saved, and the main body 1 is prevented from being upsized.

When there is no tube member 33, the second insulating layer directly touches the first through-hole 59 of the second coupling part 29. When the rotating shaft member 41 rotates, the first through-hole 59 and the second insulating layer scrape against each other, and in some cases, an external conductor may be exposed. In general, since the second coupling part 29 needs a high rigidity, the second coupling part 29 is made of a metal material. For that reason, when the external conductor is exposed, the rotating shaft member 41 and the external conductor are short-circuited, resulting in a risk that noise is fed together with signals in a center conductor. In order to avoid this drawback, it is preferable to form the second insulating layer having a desired thickness. On the other hand, the cables 32 are difficult to bend. As a result, an inner diameter of the first through-hole 59 and L2 must be increased. For that reason, in order to downsize the second coupling part 29 with the saved space and decreased diameter of the first through-hole 59, it is preferable that the cables 32 are inserted through the tube member 33 without being bundled by a tape.

Also, in this embodiment, when the main body 1 is in the closed state, the bearing member 50 is abutted against the moving member 48 to move the moving member in the direction opposite to the arrow C under the control. A component fixed to the lower housing 3, or a part of the lower housing 3 may control the position of the moving member 48 instead of the bearing member 50.

Also, the second spring member 49 according to this embodiment is configured by a compression spring, and when the main body 1 is in the closed state, the moving member 48 is moved in the direction opposite to the arrow C against the spring force of the second spring member 49. However, the present invention is not always limited to this configuration. For example, the second spring member 49 is configured by a tension spring, and the protrusion 72 is pulled against the direction opposite to the arrow C by a force of the tension spring. When the main body 1 is in the closed state and the second open state, a part of the bearing member 50 or the lower housing 3 may move the moving member 48 in the direction opposite to the arrow C against the spring force.

Also, the moving member 48 is configured to conduct so-called translational motion. However, the present invention is not always limited to this configuration. For example, a rotating shaft may be provided to move the moving member 48 about the rotating shaft by rotary motion so that the moving member 48 is not abutted against a rotating shaft member at a first position, and abutted against the rotating shaft member to regulate the rotation at a second position.

Also, although a periphery of the retaining ring 47 is not described in detail, for example, if the user drops the main body in error, an impact force causing the retaining ring 47 to fall out of the groove part 52 is exerted. Assuming this state, it is preferable that a rib that faces an outer periphery of the retaining ring 47 is disposed within the coupling part 4 so that the opening 70 of the rotating shaft member 41 is not enlarged.

The above-mentioned corners are illustrated at right angles. However, from the viewpoint of manufacturing the component, the corners may be curved or flattened, or the same edge may be abutted against the first flat surface 46A.
Also, in the above description, the large-diameter part is structured to be integrated with the rotating shaft member. Alternatively, another member may be installed.

As described above, according to the embodiment, the flat member 46 configuring the second hinge includes the first flat surface 46A that is abutted against the closest corner of the first spring member 44, and the second flat surface 46B that is a rear surface of the first flat surface 46A and abutted against the retaining ring 47, and the first spring member 44 is abutted against the first flat surface 46A, and abuts the second flat surface against a flat surface of the retaining ring. Also, the retention member 42 retains the cam member 43, the first spring member 44, the retaining ring 47, and the flat member 46 therebetween.

According to the above configuration, the detachably attached retaining ring 47 is used, and the first spring member 44 is abutted against the first flat surface 46A which is flat. Therefore, a constant deflection can be stably given to the first spring member 44 while assembling is enabled by simple work. Also, since disassembly is enabled by merely detaching the retaining ring 47, the maintenance property can be improved, and a reduction in a disassembling time and a classification of material at the time of disposal can be eased. Further, since the small-diameter part 51 can be held at a distance as long as possible, an inclination of the rotating shaft member 41 relative to the retention member 42 can be reduced.

Also, since the second hinge is disposed in the openable cellular phone, an inclination of the housing configuring the openable cellular phone can be reduced.

According to this embodiment, the flat member 46 configuring the second hinge is interposed between the first spring member 44 and the retaining ring 47 so that the urging force of the first spring member 44 is exerted on the rotating shaft member. Also, the retention member 42 retains the rotating shaft member 41 so as to retain the cam member 43, the first spring member 44, the retaining ring 47, and the flat member 46 therebetween.

Also, according to the above configuration, the detachably attached retaining ring 47 is used, and the urging force of the first spring member 44 is exerted on the rotating shaft member through the flat member 46 and the retaining ring 47. Therefore, a constant deflection can be stably given to the first spring member 44 while assembling is enabled by simple work. Also, since disassembly is enabled by merely detaching the retaining ring 47, the maintenance property can be improved, and a reduction in the disassembling time and a classification of material at the time of disposal can be eased. Further, since the small-diameter part 51 can be held at a distance as long as possible, an inclination of the rotating shaft member 41 relative to the retention member 42 can be reduced.

Also, in the second hinge, when the moving member 48 is at the first position, the moving member 48 is abutted against the rotating shaft member 41 to regulate the rotation of the rotating shaft member 41, and when the moving member 48 is at the second position, the abutment of the moving member 48 and the rotating shaft member 41 is released to cancel the rotation regulation of the rotating shaft member 41, and a part of the rotating shaft member 41 covers the tip of the moving member 48 at the first position side.

According to the above configuration, when the moving member tries to move to the first position from a state where the moving member 48 is at the second position due to malfunction or erroneous operation even if the rotating shaft member 41 is unmoved, the movement of the moving member 48 can be blocked.

Also, since the second hinge is provided in the openable cellular phone, when the moving member 48 tries to move to the first position from one situation of the openable cellular phone where the moving member 48 is at the second position due to malfunction or erroneous operation of the user even if the rotating shaft member 41 is unmoved, the movement of the moving member 48 can be blocked.

Also, the main body 1 includes the coupling part 4 that couples the upper housing 2 to be rotatable about the axial core a in the direction of the arrow A with the lower housing 3, and couples the upper housing 2 to be rotatable about the axial core b in the direction of the arrow B with the lower housing 3. The coupling part 4 includes the rotating shaft member 41 that is connected to the upper housing 2, the retention member 42 that rotatably retains the rotating shaft member 41, the moving member 48 that is disposed within the coupling part 4, and movable from the first position to the second position, the second spring member 49 that urges the moving member from the first position toward the second position, and the movement controller that is formed of a part of the lower housing 3 or fitted to the lower housing 3, and changes the position of the moving member 48 according to the situation of the main body 1 under the control. The moving member 48 is abutted against the rotating shaft member 41 at any one of the first position and the second position to regulate the rotation of the rotating shaft member 41, and releases the abutment against the rotating shaft member 41 at the other of the first position and the second position to permit the rotation of the rotating shaft member 41. The movement controller is abutted against the moving member 48 to control the position of the moving member 48 against the urging force of the second spring member 49 when rotating the upper housing about the axial core a in the direction of the arrow A or about the axial core a in the direction opposite to the direction of the arrow A relative to the lower housing 3.

According to the above configuration, since the movement controller controls the position of the moving member 48 in conjunction with the situation of the housing configuring the main body 1, the user can regulate the rotation of the upper housing 2 by merely changing the upper housing 2 about the axial core a in the direction of the arrow A from the closed state. Also, the user can cancel the rotation regulation of the upper housing 2 by merely changing (returning) the lower housing 3 to a superposed state. Also, when the upper housing 2 is brought into an abnormal state (third open state) in which the upper housing 2 is rotated about the axial core a in the direction of the arrow A after the upper housing 2 has been changed about the axial core b in the direction of the arrow B, the upper housing 2 is rotated about the axial core b in the direction opposite to the direction of the arrow A, or about the axial core b in the direction opposite to the direction of the arrow B. As a result, the upper housing 2 can be restored to a normal state (first open state or second open state).

Also, according to the above embodiment, the second housing can be laterally opened from the closed state, and the rotation of the second housing in the laterally opened direction from the longitudinally opened state can be regulated when the second housing transitions from the closed state to the longitudinally opened state. Hence, even if the user calls while applying the second housing to his head, the second housing is prevented from being rotated despite the user's intention. Thus, the usability is the same as that in the conventional openable cellular phone. Also, since the wiring space can be reduced, the terminal can be prevented from being upsized such that the inclination of the rotating shaft member relative to the retaining member can be reduced. Thus, the openable terminal can be provided which can be longitudinally and laterally opened while avoiding the upsizing, with a structure which is small in the number of components and simple.

Also, according to the above embodiment, the rotation is prohibited in a first given state, and the rotation is permitted at a second given position. The assembling property and the disassembling property are more improved with a simple structure. The openable cellular phone having the rotating device is so configured as not to change from the first open state to the third open state, and also so configured as to change to any one of the first and second open states when the terminal changes from the second open state to the third open state.

Subsequently, a description will be given of the configuration of regulating an open angle (angle formed between the main surface 3A of the lower housing 3 and the main surface 2A of the upper housing 2) when the main body is in the first open state.
In the conventional folding mobile terminal, the lower housing has a recess that is closed to the connection part connecting the upper housing and the lower housing, and into which a cushion having flexibility is inserted, and the upper housing has a protrusion. When the two housing are opened, the protrusion is accommodated into the recess, and the opening angle between the upper housing and the lower housing can be adjusted. This configuration is disclosed in, for example, JP-A-2003-110674.

However, in the conventional mobile terminal, the protrusion is protruded from the upper housing toward the external of the telephone in a state where the mobile terminal is folded. In general, the use carries the folding mobile terminal of this type in his pocket or bag in the folded state. Accordingly, when the user removes the mobile terminal from the pocket or bag, the protrusion may be caught by the pocket or bag so that the mobile terminal cannot be smoothly removed from the pocket or bag. Therefore, taking ease of removal from the pocket into account, it is desirable to decrease a height of the protrusion and decrease a size thereof. On the other hand, because the protrusion needs the size and height as large as the protrusion is accommodated in the recess, there is a circumstance where the property of removal from the pocket may be slightly sacrificed. Also, there is a circumstance in which the design of a mobile terminal device is restricted by the protrusion protruded from the housing.

In this embodiment, the present invention has been made in view of the above conventional circumstance, and can provide the mobile terminal having a structure in which the opening of a given angle or more is prevented without provision of the protrusion protruded from the housing. Hereinafter, the mobile terminal will be described in detail.

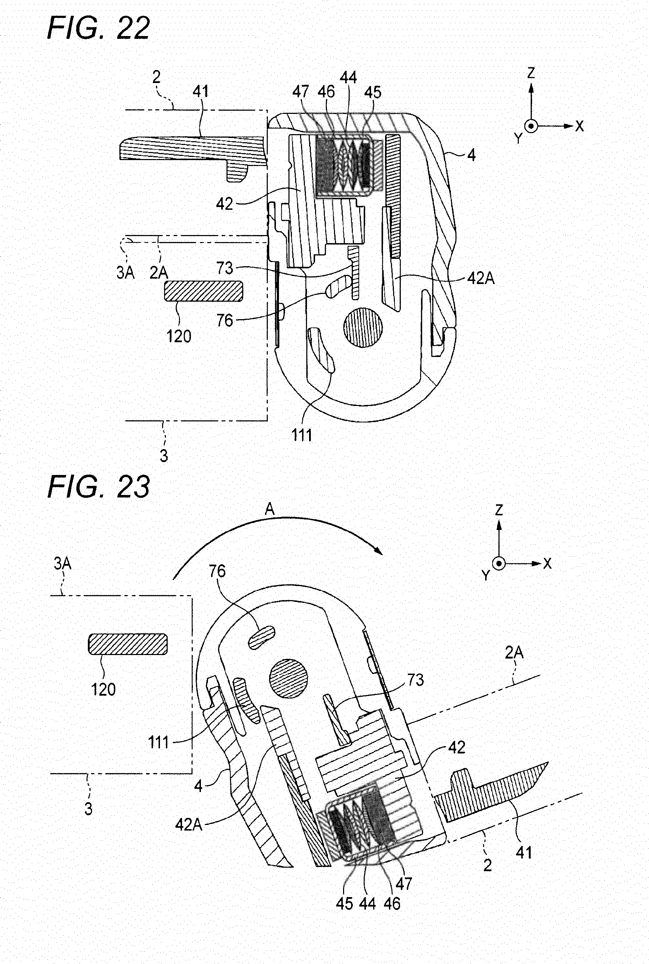

A description will be given of the mobile terminal with reference to FIGS. 22 and 23. FIG. 23 is a cross-sectional view of the neighborhood of the second hinge 29 when the main body 1 is in the closed state (state of FIG. 1 (a)). FIG. 22 is a cross-sectional view of the neighborhood of the second hinge 29 immediately before the main body 1 rotates from the closed state in the direction of the arrow A, and becomes in the first open state (state of FIG. 1 (b)).

Referring to FIG. 23, when the main body 1 is in the closed state, the first catching part 76 of the bearing member 50 fixed to the lower housing 3 is abutted against the leg 73 of the moving member 48, and moves the moving member 48 in the direction opposite to the arrow C (illustrated in FIG. 4) until the protrusion 72 of the bearing member 50 is accommodated into the accommodation part 63. When the main body 1 rotates from the closed state in the direction of the arrow A, the bearing member 50 rotates in the direction opposite to an arrow F (illustrated in FIG. 12) relative to the upper housing 2. The above-mentioned first coupling part 28 generates a torque causing the main body 1 to become in the closed state when an angle formed between the main surface 2A of the upper housing 2 and the main surface 3A of the lower housing 3 falls within a given range of 90 degrees or lower from the closes state in which the main surface 2A of the upper housing 2 faces the main surface 3A of the lower housing 3. Also, when the angle formed between the main surface 2A of the upper housing 2 and the main surface 3A of the lower housing 3 falls within a given range of from 90 degrees or higher to the first open state, the main body 1 generates a torque causing the main body 1 to become in the first open state. The torque or the size of the first coupling part 28 may be arbitrarily set according to the size of the main body or the usability.

FIG. 22 illustrates a state in which a slight clearance is formed between a part (wall 42a) of the retention member 42 and the second catching part 111 of the bearing member 50, which is when the part (wall 42a) and the second catching part 111 are about to be abutted against each other at a time immediately before the main body 1 becomes in the first open state (state of FIG. 1(b)). A state in which the clearance is eliminated is the first open state of the main body 1. In the first open state, a force allowing the upper housing 2 to be opened relative to the lower housing 3 is given by a torque of the above-mentioned first hinge 28 to eliminate the clearance.

With the above configuration, in the first open state (state in which the main surface 3A of the lower housing 3 and the main surface 2A of the upper housing 2 form a given angle), a wall 42a of the retention member 42 and the second catching part 111 of the bearing member 50 are abutted against each other. A maximum angle (open angle) formed between the main surface 3A of the lower housing 3 and the main surface 2A of the upper housing 2 can be defined by abutting the wall 42a of the retention member 42 against the second catching part 111 of the bearing member 50. Since the defining method can be realized without provision of the protrusions protruded from the outer surface of the upper housing 2 and the outer surface of the lower housing 3, the problem with the conventional art is solved without restriction of the design property.

That is, there are provided the first housing (any one of the upper housing and the lower housing), the second housing (the other of the upper housing and the lower housing), the coupling part that openably and closably couples the first housing and the second housing together, and the housing retaining member (second hinge 29 in the embodiment of the present invention) that is arranged to straddle between one housing and the coupling part, nonrotatably retained by one housing, nonrotatably retained by the coupling part, arranged adjacent to the bearing member within the coupling part, and retains the other housing. The housing retaining member is abutted against the bearing member when the first housing and the second housing are opened at a given angle.

The housing retaining member (second hinge 29) is retained to the coupling part 4, for example, screwed and fixed to the coupling part 4 by the screw 83, and the bearing member 50 is also screwed to the lower housing 3 by a screw. Also, as illustrated in FIG. 14, an outer periphery of the bearing member 50 is rotatably retained to the second retention part 80 while straddling between the guide part 78 of the lower housing 3 and the second retention part 80 of the coupling part 4. Therefore, the open angle of the first open state is regulated while the lower housing 3 and the upper housing 3 including the coupling part 4 are smoothly and rotatably coupled with each other in the direction of the arrow A. Since the bearing member 50 is retained to the lower housing 3 as described above, the bearing member 50 is prevented from coming free from a fitting position during the open/close operation. Therefore, the open angle is prevented from becoming unstable.

Also, in this embodiment, a description is given of the configuration in which the coupling part 4 is rotatable relative to the lower housing 3, and the upper housing 2 is rotatable relative to the coupling part 4. On the other hand, in a configuration where the upper housing 2 is rotatable relative to the coupling part 4, or in a configuration where the lower housing and the upper housing are rotatably coupled to each other only in the direction of the arrow A without using the coupling part, the bearing member may be arranged to straddle between the upper housing and the lower housing.

In this embodiment, a counter member against which the retaining member of the second hinge is abutted in the first open state is described as the bearing member. However, the bearing member may not always have the bearing function. When the second hinge is fixed to any one of the housings, a side of a part of the other housing against which the second hinge is abutted when the housing is opened may be configured within the other housing.

Also, in the above description, the bearing member is fastened to the lower housing by a screw. However, for example, a clearance between the bearing member and the surrounding partial housing is reduced, or the bearing member is pressed by another component so that the bearing member may be retained without slight movement.

The present invention has been described in detail and with reference to the specific embodiments. However, it would be obvious to one skilled in the art that various changes and modifications can be made without departing from the spirit and scope of the invention.

The present invention is based on Japanese Patent Application No. 2009-209742 filed on September 10, 2009 and Japanese Patent Application No. 2009-255204 filed on November 6, 2009, and the contents of which are incorporated herein by reference.

### Industrial Applicability.

The mobile terminal according to the present invention has an advantage that the housing can be prevented from being opened while regulating the rotation of the housing about another rotating axis in the direction perpendicular to one rotating axis relative to the rotation about the one rotating axis.

### Description of Symbols

1, main body of an openable cellular phone
2, upper housing
3, lower housing
4, coupling part
29, second coupling part
32, cables
33, tube member
41, rotating shaft member
42, retention member
43, cam member
44, first spring member
44A, 44B, corner
46, flat member
46A, first flat surface
46B, second flat surface
47, retaining ring
48, moving member
49, second spring member
50, fitting member (bearing member or movement controller)
51, small-diameter part
52, groove part
53, large-diameter part
59, first through-hole
70, opening
73, leg
76, first catching part
112, large-diameter part
112D, side surface
301, protrusion

## Claims

1. A mobile terminal comprising:
a first housing;
a second housing; and
a coupling part that rotatably couples the second housing with the first housing in a first direction, and rotatably couples the second housing with the first housing in a second direction orthogonal to the first direction, from a superposed state in which the first housing and the second housing are superposed on each other,
wherein the coupling part includes:
a first rotating shaft member that rotates in the first direction;
a second rotating shaft member that rotates in the second direction; and
a movement controller that is arranged adjacent to the second rotating shaft member and is fixed to an interior of the first housing; and
wherein the movement controller includes a cylindrical part, and has a step formed on an outer periphery of the cylindrical part, and a side surface of the step is fixed to a protrusion protruded toward the interior of the first housing from the first housing in a state that the side surface of the step faces the protrusion in the first direction.

2. The mobile terminal according to claim 1, wherein the first housing is configured by engaging a first partial housing member with a second partial housing member;
wherein the first partial housing member is arranged on a surface facing the second housing, and the second partial housing member is arranged on a rear surface of the first partial housing member; and
wherein the protrusion is arranged on the second partial housing member.

3. The mobile terminal according to claim 1, wherein the coupling part includes:
a retention member that rotatably retains the rotating shaft member;
a moving member that is disposed within the coupling part, and is movable from a first position to a second position; and
a spring member that urges the moving member from the first position to the second position;
wherein the moving member abuts against the rotating shaft member to regulate the rotation of the rotating shaft member at one of the first position and the second position, and releases the abutment against the rotating shaft member to permit the rotation of the rotating shaft member at the other of the first position and the second position; and
wherein the movement controller is configured by a part of the first housing or fitted to the first housing, and abuts against the moving member to change a position of the moving member against an urging force of the spring member when rotating the second housing in the first direction or an opposite direction to the first direction relative to the first housing.

4. The mobile terminal according to claim 1, wherein the moving member is abutted against the rotating shaft member at the first position, and releases the abutment against the rotating shaft member at the second position;
wherein the spring member urges the moving member toward the first position from the second position;
wherein the movement controller is abutted against the moving member when the first housing and the second housing are superposed on each other and controls so as to move the moving member to the second position against an urging force of the spring member; and
wherein the movement controller releases the abutment against the moving member when the second housing rotates in the first direction relative to the first housing from the superposed state, and moves the moving member to the first position by the urging force of the spring member.
